# EUROPEAN PATENT SPECIFICATION

(11) **EP 4 426 936 B1**
(45) Date of publication and mention of the grant of the patent: **01.07.2026**
(21) Application number: 22890518.8
(22) Date of filing: 03.11.2022
(51) Int. Cl.: F03D 17/00, G01M 5/00

(54) **A WIND TURBINE SYSTEM AND A METHOD FOR PROVIDING MEASUREMENT DATA**
WINDTURBINENSYSTEM UND VERFAHREN ZUR BEREITSTELLUNG VON MESSDATEN
SYSTÈME D'ÉOLIENNE ET PROCÉDÉ DE FOURNITURE DE DONNÉES DE MESURE

(30) Priority: 05.11.2021 SE 2151360
(43) Date of publication of application: 11.09.2024
(73) Proprietor: Sigicom AB, 125 45 Älvsjö (SE)
(72) Inventor: SKOG, Mattias, 123 50 Farsta (SE); THUVANDER, Henrik, 733 36 Sala (SE); NERI, Daniel, 126 35 Hägersten (SE); JANSSON, Tommy, 178 51 Ekerö (SE); FINSTEEN GJØDVAD, Johan, 3650 Ølstykke (DK)
(74) Representative: Rouse AB
(86) International application number: PCT/SE2022/051007
(87) International publication number: WO 2023/080826

(56) References cited:
- EP-A1- 3 623 616
- EP-A2- 1 674 724
- KR-A- 20130 055 149
- KR-A- 20130 055 149
- KR-A- 20150 032 395
- US-A1- 2019 049 606
- US-A1- 2020 018 290
- US-B2- 8 033 788
- US-B2- 8 418 413
- TARPØ MARIUS ET AL: "Data-driven virtual sensing and dynamic strain estimation for fatigue analysis of offshore wind turbine using principal component analysis", vol. 25, no. 3, 16 October 2021 (2021-10-16), GB, pages 505 - 516, XP093065448, ISSN: 1095-4244, Retrieved from the Internet <URL:https://onlinelibrary.wiley.com/doi/full-xml/10.1002/we.2683> DOI: 10.1002/we.2683
- TARPØ MARIUS, AMADOR SANDRO, KATSANOS EVANGELOS, SKOG MATTIAS, GJØDVAD JOHAN, BRINCKER RUNE: "Data‐driven virtual sensing and dynamic strain estimation for fatigue analysis of offshore wind turbine using principal component analysis", WIND ENERGY, JOHN WILEY & SONS, GB, vol. 25, no. 3, 1 March 2022 (2022-03-01), GB , pages 505 - 516, XP093065448, ISSN: 1095-4244, DOI: 10.1002/we.2683

## Description

### TECHNICAL FIELD

The technology disclosed relates to the structural monitoring of wind power installations and to the monitoring of wind turbine towers by continuously obtaining low-noise movement measurement data and tilt data for producing dynamic data for position and tilt over time.

The technology disclosed relates to a wind turbine comprising a measurement system with at least three measurement units all arranged in the same horizontal plane of the wind turbine tower and configured for measuring their respective motion or movements, e.g. their respective velocities, and at least one tilt sensor or vertically oriented geophone for determining the current tilt or inclination of the same horizontal plane (e.g. the current direction and angle of inclination of the horizontal plane) and arranged in substantially the same horizontal plane as the at least three measurement units.

The technology disclosed further relates to a measurement system comprising at least three measurement units, e.g. horizontally oriented geophones, each arranged in substantially the same horizontal plane of a wind turbine tower and configured to measure their respective motion or movements, and at least one tilt sensor or vertically oriented geophone arranged in substantially the same horizontal plane as the at least three measurement units and configured to determine the current tilt or inclination of an imaginary horizontal plane section (e.g. the current direction and angle of inclination of the horizontal plane section) determined by the mounting positions of the at least three measurement units. In particular, the measurement system comprising the at least three measurement units and the at least one tilt sensor or vertically oriented geophone is configured to continuously determine the current position and tilt of a horizontal plane section essentially determined by the mounting positions of the at least three measurement units based on the movement measurement data obtained by the at least three measurement units and the inclination of the horizontal plane section obtained by the at least one tilt sensor or vertically oriented geophone.

### BACKGROUND

A wind turbine system is subjected to high mechanical strain in operation, and this can directly destroy the parts of wind turbine or cause parts impaired for a long time because of mechanical fatigue. For fear of these overloads, in the middle of the equipment operation, it is important to carefully determine the specified strain of parts, and, for fear of any damage of wind energy plant, the operation of the wind turbine may be limited by wind speed, or by carrying out suitable protective measure such as shutting down the wind energy plant.

Wind turbines are often operated under conditions in which the fatigue loads are occasionally of such magnitude that if the loads were to be maintained at that magnitude, the fatigue capacity of the wind turbine structure would be exceeded during its entire design lifetime. To meet such situations, it is known in the state of the art to implement load monitoring sensors and to shut down the wind turbine in case of high loads or even overloading.

U.S. Pat. No. 8,033,788 describes a method for determining fatigue loads of a wind turbine that reduces the amount of sensors that are required while increasing the robustness of the sensor systems, and, at the same time, reduces calculation complexity. This method makes use of this technical effect by using a transfer function derived from a reference wind turbine at which the mentioned first sensors and the mentioned second sensors are located at and at which also the calculation of the transfer function may take place. Such a reference wind turbine does not need to be part of a wind park of operative wind turbines. In fact, it can be far away from the operative wind turbine and does not even need to exist at the same time as the operative wind turbine.

EP 1,674,724 discloses a kind of method of measuring and analyzing the wind energy plant strain. In known method, the acceleration of tower head is measured by means of acceleration transducer, and acceleration transducer is fixed on the substrate in cabin. Measured acceleration information converts the movement velocity of tower head to determines the strain that is taken place based on this movement velocity. The damage or the fatigue of the component parts of the deducibility strain influence that goes out to be detected in view of the above. Another prior art solution is disclosed in document XP093065448, "Data-driven virtual sensing and dynamic strain estimation for fatigue analysis of offshore wind turbine using principal component analysis",WIND ENERGY, vol. 25, no. 3, 16 October 2021 (2021-10-16), pages 505-516.

### PROBLEMS WITH THE PRIOR ART

In order to reduce technical effort in wind turbine manufacturing, it is desired to reduce safety redundancies in the design of wind turbine supporting structures. Limits for reducing such safety redundancies are usually defined by the mechanical stress that affects the wind turbine. A known approach is thus to design the wind turbine structures so as just to withstand the cumulative fatigue loading on the structure throughout its design life when operating under a given set of environmental conditions.

Wind turbines are often operated under conditions in which the fatigue loads are occasionally of such magnitude that if the loads were to be maintained at that magnitude, the fatigue capacity of the wind turbine structure would be exceeded during its entire design lifetime.

To meet such situations, it is known in the state of the art to implement measurement systems with load monitoring sensors installed and to shut down the wind turbine in case of high loads or even overloading.

In order to provide sufficiently accurate measurement data for the current load, the measurement systems known in the state of the art often comprise measurement units which are located high up in the wind turbine and therefore require relatively long shutdowns of the wind turbine during installation and maintenance due to the location of the measurement units and the need for time consuming climbing high up in the tower. The shutting down of a wind turbine produces undesired times of unavailability, in which the wind turbine does not produce energy. Further, the shutdown process may by itself add to the overall fatigue damage of the wind turbine and stress or strain in the structure of the wind turbine.

### SUMMARY

The technology disclosed relates to a wind turbine system comprising a wind turbine tower and a measurement system including at least three measurement units arranged in substantially the same horizontal plane of the wind turbine tower structure.

The measurement system of the wind turbine system according to the technology disclosed comprises at least three horizontally oriented geophones arranged in three separate mounting positions in substantially the same horizontal plane section of an upright pillar structure of the wind turbine system and where each of the at least three horizontally oriented geophones is configured to continuously obtain horizontal movement measurement data for their respective mounting position in the upright pillar structure.

In aspects, the measurement system further comprises at least three vertically oriented geophones arranged in three separate mounting positions in the same horizontal plane section as the horizontally oriented geophones where each of the at least three vertically oriented geophones is configured to continuously obtain vertical movement measurement data for their respective mounting position. The wind turbine system, or an external system communicatively coupled to the wind turbine system, is further configured to determine the current direction and angle of inclination of the horizontal plane section based on vertical movement measurement data for the at least three mounting positions in the horizontal plane section obtained by each of the at least three vertically oriented geophones, and, based on the current direction and angle of inclination of the horizontal plane section and the current horizontal movement measurement data obtained by the at least three horizontally oriented geophones, determine the current at least one of strain, stress and deformation induced in essentially any arbitrary position in the wind turbine tower structure.

In embodiments, the measurement system comprises at least three vertically oriented geophones arranged in three separate mounting positions in the same horizontal plane section as the horizontally oriented geophones and each configured to continuously obtain vertical movement measurement data for their respective mounting position. The wind turbine system of the technology disclosed may then be configured to determine the current (Z-axis) direction and angle of inclination of the horizontal plane section based on vertical movement measurement data for the at least three mounting positions in the horizontal plane section obtained by each of the at least three vertically oriented geophones, adjust the horizontal movement measurement data obtained by each of the at least three horizontally oriented geophones based on the determined current direction and angle of inclination of the horizontal plane section, and determine the current at least one of strain, stress and deformation induced in essentially any arbitrary position in the wind turbine tower structure based on the adjusted horizontal movement measurement data.

In embodiments, the wind turbine system or an external system communicatively coupled to the measurement system is further configured to identify at least one of known force and eigenmode movements from the measurement data obtained, and then superimpose the known solution from the structural model to accurately determine at least one of strain, stress and deformation of any arbitrary position of the wind turbine tower structure. In embodiments, the wind turbine system is further configured to identify at least one of known force and eigenmode movements from the continuously determined current direction and angle of inclination of the horizontal plane section and the horizontal movement measurement data continuously obtained by the at least three horizontally oriented geophones, and then superimpose the known solution from the structural model to accurately determine at least one of strain, stress and deformation of any arbitrary position of the wind turbine tower structure.

The measurement system may then be configured to continuously and synchronically transmit horizontal movement measurement data simultaneously obtained by the at least three horizontally oriented geophones. The measurement system may be further configured to continuously and synchronically transmit vertical movement measurement data simultaneously obtained by the at least three vertically oriented geophones.

In aspects, the technology disclosed relates to a method in a wind turbine system comprising the following steps:
a. arranging at least three horizontally oriented geophones in three separate mounting positions in substantially the same horizontal plane of the upright pillar structure;
b. obtaining, continuously by each of the at least three horizontally oriented geophones, movement measurement data for their respective mounting position;
c. arranging at least three vertically oriented geophones in three separate mounting positions in substantially the same horizontal plane of the upright pillar structure as the at least three horizontally oriented geophones;
d. obtaining, continuously by each of at least three vertically oriented geophones, movement measurement data for their respective mounting position;
e. determining, based on the movement measurement data obtained by each of the at least three vertically oriented geophones, the current direction and angle of inclination of a horizontal plane section defined by the arrangement of the at least three horizontally oriented geophones;
f. adjusting, based on the determined current direction and angle of inclination of a horizontal plane section, the movement measurement data obtained by each of the at least three horizontally oriented geophones; and
g. determining, based on the adjusted movement measurement data, the current at least one of strain, stress and deformation induced in essentially any arbitrary position in the wind turbine tower structure.

In embodiments, the method further comprises identifying at least one of known force and eigenmode movements from the measurement data obtained, and then superimpose the known solution from the structural model to accurately determine at least one of strain, stress and deformation of any arbitrary position of the wind turbine tower structure.

In embodiments, the method further comprises identifying at least one of known force and eigenmode movements from the continuously determined current direction and angle of inclination of the horizontal plane section and the horizontal movement measurement data continuously obtained by the at least three horizontally oriented geophones, and then superimpose the known solution from the structural model to accurately determine at least one of strain, stress and deformation of any arbitrary position of the wind turbine tower structure.

In embodiments, the method further comprises identifying at least one of known force and eigenmode movements from the adjusted horizontal movement measurement data continuously obtained by the at least three horizontally oriented geophones, and then superimpose the known solution from the structural model to accurately determine at least one of strain, stress and deformation of any arbitrary position of the wind turbine tower structure.

In embodiments, the method further comprises synchronically transmitting horizontal movement measurement data simultaneously obtained by the at least three horizontally oriented geophones.

In embodiments, the method further comprises synchronically transmitting vertical movement measurement data simultaneously obtained by the at least three vertically oriented geophones. In embodiments, the method further comprises at least one of obtaining and receiving said vertical movement measurement data from the at least three vertically oriented geophones and, based on the continuously at least one of obtained and received at least three vertical movement measurement data, determining the direction and angle of inclination of the horizontal plane section defined by the arrangement of the at least three horizontally oriented geophones.

In embodiments, the measurement system further comprises at least three tilt sensors and the method further comprises continuously obtaining tilt data from the at least three tilt sensor and, based on both the tilt data obtained or received from the at least three tilt sensors and the vertical movement measurement data continuously obtained or received from the at least three vertically oriented geophones, determining the direction and angle of inclination of the horizontal plane section defined by the arrangement of the at least three horizontally oriented geophones.

In embodiments, the wind turbine system is comprising a control system communicatively coupled to said measurement system and configured to continuously obtain and/or receive said vertical movement measurement data from the at least three vertically oriented geophones, and based on the continuously obtained or received at least three vertical movement measurement data, determine the direction and angle of inclination of the horizontal plane section defined by the arrangement of the at least three horizontally oriented geophones. In embodiments, each of the at least three vertically oriented geophones is configured to obtain movement measurement data, i.e. velocity data, in a higher frequency range above a certain frequency in a frequency range between 0.1 and 0.3 Hz.

In embodiments, the measurement system comprises at least three measurement units arranged in three separate mounting positions in the same horizontal plane section and each of the at least three measurement units comprises at least one vertically oriented geophone and at least one horizontally oriented geophone.

In certain embodiments, the measurement system further comprises at least three tilt sensors arranged in three separate mounting positions in substantially the same horizontal plane section as the at least three horizontally oriented geophones and the at least three vertically oriented geophones. Each of the at least three tilt sensors may then be configured to obtain tilt data in a quasi-static frequency range, thereby also including the quasi-static response of the tower when determining the direction and angle of inclination of the horizontal plane section defined by the arrangement of the at least three horizontally oriented geophones and the at least three vertically oriented geophones.

In embodiments, the measurement system comprises at least three measurement units arranged in three separate mounting positions in the same horizontal plane section. Each of the at least three measurement units may then comprise at least one horizontally oriented geophone, at least one vertically oriented geophone and at least one tilt sensor. In embodiments, the measurement system comprises at least three measurement units arranged in three separate mounting positions in the same horizontal plane section. Each of the at least three measurement units may then comprise at least one biaxial and horizontally oriented geophone, at least one vertically oriented geophone and at least one tilt sensor.

In embodiments, the measurement system comprises at least three measurement units arranged in three separate mounting positions in the same horizontal plane section. Each of the at least three measurement units may then comprise at least one triaxial geophone and at least one tilt sensor.

In aspects, the technology disclosed relates to a measurement system comprising at least three measurement units and at least one tilt sensor and/or vertically oriented geophone which are configured to obtain movement measurement data and tilt data adapted for continuously determining the current position and inclination of a horizontal plane section (e.g. the current direction and angle of inclination of the horizontal plane section) in a wind turbine tower essentially determined by the arrangement, or mounting positions, of the at least three measurement units. In embodiments and under the assumption that the horizontal plane section does not move in the vertical direction, the at least three measurement units are horizontally oriented geophones and the measurement data obtained the respective horizontally oriented geophones for is combined and used for determining the horizontal position of the horizontal plane section.

In aspects, the technology disclosed relates to a measurement system comprising at least three measurement units that are each arranged in substantially the same horizontal plane of a wind turbine tower and at least one tilt sensor or vertically oriented geophone are configured to provide measurement data for continuously determining the current position and inclination of a horizontal plane (e.g. the current normal/Z-axis direction and angle of inclination of the horizontal plane) essentially defined by the mounting positions of the at least three measurement units. The determining of the current position and inclination of a horizontal plane may then be based on the measurement data obtained by the at least three measurement units and the at least one tilt sensor or vertically oriented geophone.

In aspects, the technology disclosed relates to a wind turbine system for generating electrical energy in response to wind, the wind turbine system comprising:
a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy; and
at least three measurement units each configured to continuously obtain movement measurement data for their respective mounting position in the upright pillar structure, wherein the at least three measurement units are arranged in three separate mounting positions in substantially the same horizontal plane of the upright pillar structure.

In aspects, the wind turbine system further comprises at least one tilt sensor and/or vertically oriented geophone configured to determine the inclination of a horizontal plane section, i.e. the current normal/Z-axis direction and angle of inclination of the horizontal plane section, essentially determined by the arrangement and mounting positions of the at least three measurement units.

In embodiments, the at least three measurement units are arranged at a height level above the foundation structure which is below 1/3 of the total height of the upright pillar structure of the wind turbine tower structure.

In embodiments, the at least one tilt sensor and/or vertically oriented geophone arranged in substantially the same plane as the at least three measurement units and is/are configured to continuously determine the inclination of the horizontal plane section, i.e. the current normal/Z-axis direction and angle of inclination of the horizontal plane section.

In aspects, the technology disclosed relates to a measurement system comprising at least three horizontally oriented geophones that are each arranged in substantially the same horizontal plane of a wind turbine tower and at least one tilt sensor or vertically oriented geophone configured to provide velocity measurement data and tilt data, respectively, for continuously determining the current inclination of a horizontal plane essentially defined by the mounting positions of the at least three horizontally oriented geophones, e.g. the current normal/Z-axis direction and angle of inclination of the horizontal plane. The determining of the current inclination of the horizontal plane, or horizontal plane section, may then be based on the measurement data obtained by the at least three horizontally oriented geophones and the at least one tilt sensor or vertically oriented geophone.

According to embodiments and certain aspects of the technology disclosed, the combined data of the velocity data measured by the at least three horizontally oriented geophones together with the tilt data determined by the at least one tilt sensor or vertically oriented geophone is converted into the position and inclination of a horizontal plane section (i.e. the current direction and angle of inclination of the horizontal plane section) essentially determined by the mounting positions of the at least three horizontally oriented geophones and under the assumption that the horizontal plane section does not move vertically. In embodiments and aspects of the technology disclosed, the movement velocity of the horizontal plane section together with the inclination of the horizontal plane section determined by the at least one tilt sensor or vertically oriented geophone may then used as the sole measurement data for determining the strain that is taken place in the wind turbine.

In embodiments, the technology disclosed relates to the structural monitoring of wind power installation and, in particular, to the structural monitoring of wind turbine towers using a low-noise geophone-based measurement system, and optionally a tilt sensor, for providing movement measurement data adapted to be used for determining the current strain in the wind turbine tower.

In embodiments, the technology disclosed relates to a wind turbine system for generating electrical energy in response to wind, the wind turbine system comprising:
a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy;
at least three measurement units, e.g. at least three horizontally oriented geophones, each configured to continuously measure and/or detect the velocity, movement and/or displacement of their respective mounting position in the upright pillar structure, wherein the at least three measurement units are arranged in three separate mounting positions in substantially the same horizontal plane of the upright pillar structure, and
at least one tilt sensor and/or vertically oriented geophone arranged in substantially the same horizontal plane of the upright pillar structure as the at least three measurement units, wherein the at least one tilt sensor and/or vertically oriented geophone is/are arranged and configured to measure and/or detect the current tilt or inclination of the horizontal plane essentially defined by the at least three measurement units.

In embodiments, the wind turbine system further comprises a control system for producing extremely low-noise measurement data for at least one of position and tilt of the horizontal plane based on the velocity, movement and/or displacement data obtained by the at least three horizontally oriented geophones for their respective mounting position movement measurement data and the obtained tilt data obtained by the at least one tilt sensor and/or vertically oriented geophone arranged in substantially the same horizontal plane of the upright pillar structure of the wind turbine tower structure as the at least three horizontally oriented geophones defining the horizontal plane.

In embodiments, the at least three measurement units are arranged in three separate mounting positions in substantially the same horizontal plane and are arranged at a height level above the foundation structure which is below 1/3 of the total height of the upright pillar structure of the wind turbine tower structure.

In embodiments, the normal axis of an approximately horizontal plane section essentially defined by the arrangement of the at least three measurement units is essentially parallel to the longitudinal axis of the upright pillar structure.

In embodiments, the computer control system and/or at least one of the at least three measurement units is/are configured to continuously produce position and/or movement data for the horizontal plane based on the velocities of each of the at least three mounting positions continuously measured and/or detected by the respective of the at least three measurement units.

In embodiments, the wind turbine system comprises at least one tilt sensor and/or vertically oriented geophone arranged in substantially the same plane as the at least three measurement units, wherein the at least one tilt sensor and/or vertically oriented geophone is/are configured to continuously detect and/or determine the inclination of the horizontal plane or horizontal plane section.

In embodiments, the at least one tilt sensor and/or vertically oriented geophone is/are arranged in substantially the same mounting position as one of the at least three measurement units.

In embodiments, the at least one tilt sensor and/or vertically oriented geophone is arranged substantially in each of the mounting positions of the at least three measurement units.

In embodiments, at least one or each of the at least three measurement units is/are a biaxial geophone adapted both for obtaining movement data, e.g. velocity measurement data, and for determining the current inclination of a horizontal plane section essentially determined by the arrangement and mounting positions of the at least three measurement units.

In embodiments, at least one or each of the at least three measurement units is a geophone, e.g. horizontally oriented geophone or biaxial geophone, which comprises an integrator that is used for directly converting velocity data into position data so that the at least one measurement unit, or geophone, is providing the position data for the horizontal plane section, e.g. providing the position data to the computer control system of the wind turbine or an external processing unit. The integrator, e.g. electrical integrator, may then be directly attached to the geophone, e.g. to the horizontal oriented axis of a biaxial geophone for measuring horizontal velocity.

In embodiments, the computer control system and/or at least one of the at least three measurement units is configured to continuously produce position and tilt data for the horizontal plane or horizontal plane section essentially defined by the arrangement of the at least three measurement units, and wherein the position and tilt data is corresponding to or based on the velocities of the mounting positions continuously measured and/or detected by the at least three measurement units. The continuously determined position and tilt data for the substantially horizontal plane section may then be adapted to be used by an/the external system for determining the current at least one of strain, stress and deformation induced in essentially any arbitrary position in the wind turbine tower structure.

In embodiments, the continuously produced position and tilt data includes position data for the at least three mounting positions and tilt data in two axial directions for the horizontal plane or horizontal plane section essentially defined by the arrangement of the at least three measurement units.

In embodiments, the computer control system is configured to continuously determine, based on the produced position and/or tilt data corresponding to or based on the velocity measurement data for the at least three mounting positions continuously measured and/or detected by the at least three measurement units, the current at least one of strain, stress and deformation induced in essentially any arbitrary position in the wind turbine tower structure.

In embodiments, the computer control system and/or at least one of the at least three measurement units is/are configured to continuously adjust the velocity measurement data measured and/or detected by each of the at least three measurement units to continuously produce the position data for the horizontal plane or horizontal plane section essentially defined by the arrangement of the at least three measurement units.

In embodiments, the computer control system is configured to continuously transmit the position and tilt data for the horizontal plane essentially defined by the arrangement of the at least three measurement units to an external system. The position and/or tilt data for the substantially horizontal plane or horizontal plane section may then be the sole input for continuously determining, by the computer control system or an/the external system, the current at least one of strain, stress and deformation induced in essentially any arbitrary position in the wind turbine tower structure.

### BRIEF DESCRIPTION OF DRAWINGS

Preferred embodiments of a wind turbine system and measurement system according to the technology disclosed will be described more in detail below with reference to the accompanying drawings wherein:
Figure 1 illustrates a side view of a wind turbine according to embodiments of the technology disclosed.
Figure 2 illustrates a front view of a wind turbine according to embodiments of the technology disclosed.
Figure 3 illustrates a method for producing low-noise position and tilt data according to embodiments of the technology disclosed.
Figure 4 illustrates a method for determining at least one of strain, stress and deformation in a wind turbine according to embodiments of the technology disclosed.

### DETAILED DESCRIPTION

In the drawings, similar details are denoted with the same reference number throughout the different embodiments. In the various embodiments of the wind turbine system according to the technology disclosed, the different subsystems are denoted. The "boxes"/subsystems shown in the drawings are by way of example only and can within the scope of the technology disclosed be arranged in any other way or combination. In the drawings, similar details are denoted with the same reference number throughout the different embodiments.

Th technology disclosed relates to a wind turbine system for generating electrical energy in response to wind, the wind turbine system. The wind turbine system comprises a wind turbine tower structure comprising a foundation structure and an upright pillar structure having a substantially cylindrical and at least partially hollow cross-section structure. The system further comprises a rotor, supported by the wind turbine tower, to rotate in response to wind, wherein in response to the rotation of the rotor, the wind turbine is configured to generate electrical energy.

The wind turbine system of the technology disclosed further includes a measurement system comprising at least three horizontally oriented geophones each configured to continuously obtain horizontal movement measurement data for their respective mounting position in the upright pillar structure and arranged in three separate mounting positions in substantially the same horizontal plane section of the upright pillar structure. In embodiments, the measurement system further comprises at least three vertically oriented geophones arranged in three separate mounting positions in the same horizontal plane section as the horizontally oriented geophones. Each of the at least three vertically oriented geophones may typically be configured to continuously obtain vertical movement measurement data for their respective mounting position.

According to various embodiments of the technology disclosed, the wind turbine system, or an external system communicatively coupled to the wind turbine system (e.g. a cloud computing system), is further configured to determine the current direction and angle of inclination of the horizontal plane section based on vertical movement measurement data for the at least three mounting positions in the horizontal plane section continuously obtained by each of the at least three vertically oriented geophones. The turbine system, or an external system communicatively coupled to the wind turbine system, may then typically convert the respectively obtained vertical movement measurement data into current displacements for the at least three mounting positions in the horizontal plane section and then determine the current inclination (normal/Z-axis direction and angle of inclination) of the horizontal plane section based on the determined displacements for the at least three vertically oriented geophones.

According to aspects of the technology disclosed, the wind turbine system, or an external system communicatively coupled to the wind turbine system (e.g. a cloud computing system), is further configured to determine, based on the current direction and angle of inclination of the horizontal plane section and the current horizontal movement measurement data obtained by the at least three horizontally oriented geophones, the current at least one of strain, stress and deformation induced in essentially any arbitrary position in the wind turbine tower structure.

In aspects, the technology disclosed relates to a method for providing measurement data adapted for determining at least one of strain, stress and deformation in essentially any arbitrary position of the wind turbine tower structure of a wind turbine system comprising a foundation structure and an upright pillar structure having a substantially cylindrical and at least partially hollow cross-section structure. The wind turbine system further comprising a computer control system and a rotor configured to rotate in response to wind and which is supported by the wind turbine tower structure. According to the technology disclosed, the method may comprise the following steps:
a. arranging at least three horizontally oriented geophones in three separate mounting positions in substantially the same horizontal plane of the upright pillar structure;
b. obtaining, continuously by each of the at least three horizontally oriented geophones, movement measurement data for their respective mounting position;
c. arranging at least three vertically oriented geophones in three separate mounting positions in substantially the same horizontal plane of the upright pillar structure as the at least three horizontally oriented geophones;
d. obtaining, continuously by each of at least three vertically oriented geophones, movement measurement data for their respective mounting position;
e. determining, based on the movement measurement data obtained by each of the at least three vertically oriented geophones, the current direction and angle of inclination of a horizontal plane section defined by the arrangement of the at least three horizontally oriented geophones;
f. adjusting, based on the determined current direction and angle of inclination of a horizontal plane section, the movement measurement data obtained by each of the at least three horizontally oriented geophones; and
g. determining, based on the adjusted movement measurement data, the current at least one of strain, stress and deformation induced in essentially any arbitrary position in the wind turbine tower structure.

In embodiments, the method further comprises identifying at least one of known force and eigenmode movements from the measurement data obtained, and then superimpose the known solution from the structural model to accurately determine at least one of strain, stress and deformation of any arbitrary position of the wind turbine tower structure.

In embodiments, the method further comprises identifying at least one of known force and eigenmode movements from the continuously determined current direction and angle of inclination of the horizontal plane section and the horizontal movement measurement data continuously obtained by the at least three horizontally oriented geophones, and then superimpose the known solution from the structural model to accurately determine at least one of strain, stress and deformation of any arbitrary position of the wind turbine tower structure.

In embodiments, the method further comprises identifying at least one of known force and eigenmode movements from the adjusted horizontal movement measurement data continuously obtained by the at least three horizontally oriented geophones, and then superimpose the known solution from the structural model to accurately determine at least one of strain, stress and deformation of any arbitrary position of the wind turbine tower structure.

In embodiments, the method further comprises synchronically transmitting, for example to a control unit or an external control system, horizontal movement measurement data simultaneously obtained by the at least three horizontally oriented geophones.

In embodiments, the method further comprises synchronically transmitting vertical movement measurement data simultaneously obtained by the at least three vertically oriented geophones.

In embodiments, the method further comprises at least one of obtaining and receiving the vertical movement measurement data from the at least three vertically oriented geophones and, based on the continuously at least one of obtained and received at least three vertical movement measurement data, determining the direction and angle of inclination of the horizontal plane section defined by the arrangement of the at least three horizontally oriented geophones.

In embodiments, the measurement system further comprises at least three tilt sensors and the method further comprises continuously obtaining tilt data from the at least three tilt sensor and, based on both the tilt data obtained or received from the at least three tilt sensors and the vertical movement measurement data continuously obtained or received from the at least three vertically oriented geophones, determining the direction and angle of inclination of the horizontal plane section defined by the arrangement of the at least three horizontally oriented geophones.

In aspects, the wind turbine system, or an external system communicatively coupled to the wind turbine system (e.g. a cloud computing system), may then be further configured to identify at least one of known force and eigenmode movements from the measurement data obtained, and then superimpose the known solution from the structural model to accurately determine at least one of strain, stress and deformation of any arbitrary position of the wind turbine tower structure. In embodiments, the turbine system (or the external system) may be further configured to identify at least one of known force and eigenmode movements from the continuously determined current direction and angle of inclination of the horizontal plane section and the horizontal movement measurement data continuously obtained by the at least three horizontally oriented geophones, and then superimpose the known solution from the structural model to accurately determine at least one of strain, stress and deformation of any arbitrary position of the wind turbine tower structure.

In embodiments, the measurement system further comprises, in addition to the at least three horizontally oriented geophones and the at least three vertically oriented geophones (or at least three triaxial geophones), at least three tilt sensors arranged in three separate mounting positions in the same horizontal plane section as the geophones. The at least three tilt sensors may each be configured to obtain tilt data in a quasi-static frequency range, for example below a certain cut-off frequency, whereas the at least three vertically oriented geophones may each be configured to obtain movement measurement data (i.e. measure velocity) in a higher frequency range above a certain cut-off frequency. In various embodiments, the cut-off frequency for each of the at least three tilt sensors may be the same as the cut-off frequency range for each of the at least three vertically oriented geophones or the cut-off frequency for the at least tilt sensors may be higher than the cut-off frequency for the at least three vertically oriented geophones. However, each cut-off frequency is typically within the frequency range 0.1 to 0.3 Hz in that the cut-off frequency for the at least tilt sensors is below 0.3 Hz and the cut-off frequency for the at least three vertically oriented geophones is above 0.1 Hz.

In embodiments, the system and method of the technology disclosed further comprise applying a high-pass filter to the measurement data to filter out the frequencies of the measurement data above the cut-off frequency used for the at least three vertically oriented geophones, e.g. for the vertically oriented geophones in each node. In embodiments system and method of the technology disclosed further comprise applying, by the system or an external system, a low-pass filter to the measurement data to filter out the frequencies of the measurement data below a cut-off frequency used for each of the at least three tilt sensors. The use of tilt sensors provides the technical effect of better/more accurate estimates of the dynamic strain in all parts of the tower through more accurate determinations/approximations of the inclination (normal axis direction and angle of inclination) of the horizontal plane section by allowing also the quasi-static response of the tower (below around 0.2 Hz, as well as static responses) to be included in the input data for determining the horizontal plane section's direction and angle of inclination.

In aspects, the technology disclosed relates to a wind turbine system including a measurement system comprising at least three horizontally oriented geophones and at least three vertically oriented geophones arranged in the same horizontal plane of a wind turbine tower structure. The at least three horizontally oriented geophones are each configured to obtain movement measurement data, i.e. configured to measure their respective velocity, for determining the horizontal displacement of the respective horizontally oriented geophone and the at least three vertically oriented geophones are each configured to obtain movement measurement data, i.e. measure velocity, for determining the vertical displacement for the respective vertically oriented geophone and the at least three vertical displacements are, in turn, used for determining the current direction and angle of inclination of the horizontal plane section defined by the arrangement of the at least three horizontally oriented geophones.

In embodiments, each of the at least three horizontally oriented geophones may then be a biaxial geophone configured to obtain velocity measurement data in two directions in the same horizontal plane, for example configured to obtain velocity measurement data in two orthogonal axis directions in a horizontal plane section defined by the arrangement of the at least three horizontally oriented geophones, and the obtained velocities for the two orthogonal axis directions may then be adjusted based on the approximation of the current direction and angle of inclination of the horizontal plane section determined based on the velocity measurements by the at least three vertically oriented geophones.

In embodiments, the velocity/movement measurement data obtained by each of the at least three vertically oriented geophones are synchronically transmitted to a control system configured to continuously receive/obtain the velocity/movement measurement data and determine, under the assumption that the horizontal plane section defined by the arrangement of the at least three horizontally oriented geophones does not move in the vertical direction, an approximation of the inclination of the horizontal plane section based on each of the at least three velocity measurements synchronically received/obtained from the respective vertically oriented geophone. The control system determines the inclination for the whole horizontal plane section defined by the at least three horizontally oriented geophones based on the at least three velocity measurement data obtained from each of the at least three vertically oriented geophones. Typically, the at least three essentially simultaneously measured velocities obtained from the at least three vertically oriented geophones are each converted by the control system into displacements for the respective vertically oriented geophone and a combination of the at least three displacements are used by the control system for determining an approximation of the inclination of the whole horizontal plane section defined by the arrangement of the at least three horizontally oriented geophones, i.e. the approximation includes that each position in the horizontal plane section defined by the arrangement of the at least three horizontally oriented geophones has the same inclination.

In embodiments, the control system is further configured to adjust the velocities measured by each of the respective at least three horizontally oriented geophones (and/or adjust the respective displacements determined from the at least three velocities) based on the approximation of the inclination of the horizontal plane section defined by the arrangement of the at least three horizontally oriented geophones. The adjusted velocities and/or displacements for the respective at least three horizontally oriented geophones are then used by the control system for determining, under the assumption that the horizontal plane section does not move vertically, the current at least one of strain, stress and deformation induced in essentially any arbitrary position in the wind turbine tower structure. Each of the at least three horizontally oriented geophones may then be a biaxial geophone configured to obtain velocity measurement data in two directions in the same horizontal plane, for example configured to obtain velocity measurement data in two orthogonal axis directions in a horizontal plane section defined by the arrangement of the at least three horizontally oriented geophones, and the obtained velocities for the two orthogonal axis directions may then be adjusted based on the approximation of the inclination of the horizontal plane section determined based on the velocity measurements by the at least three vertically oriented geophones.

Hence, in embodiments the control system of the technology disclosed is configured to adjust the respective at least three velocity measurements (and/or displacements determined from the velocity measurements) essentially simultaneously obtained by each of the at least three horizontally oriented geophones based on an approximation based on velocity measurements essentially simultaneously obtained by each of the at least three vertically oriented geophones and which is determining the same inclination for any of the positions in a horizontal plane section defined by the arrangement of the horizontally oriented geophones, for example at least three biaxial geophones. The control system is further configured to determine, under the assumption that the horizontal plane section does not move vertically and based on the at least three adjusted (and essentially simultaneously obtained) velocity measurements, the current at least one of strain, stress and deformation induced in essentially any arbitrary position in the wind turbine tower structure.

In aspects and embodiments, the technology disclosed relates to a wind turbine system comprising a measurement system comprising a computer control system and at least three measurement units arranged in three separate mounting positions in substantially the same horizontal plane of the upright pillar structure. Each of the at least three measurement units, or sensor units, may then comprise at least both a horizontally oriented geophone configured to continuously obtain movement measurement data for their respective mounting position in the upright pillar structure and a vertically oriented geophone providing measurement data in the form of tilt data used for determining the inclination of a horizontal plane section essentially defined by the mounting positions of the at least three measurement units. The computer control system and/or at least one of the measurement units may then be configured to use the measurement data continuously obtained from/by the at least three measurement units to determine the current inclination of a horizontal plane section defined by the mounting positions of the at least three measurement units. Each of the at least three horizontally oriented geophones may then be a biaxial geophone configured to obtain velocity measurement data in two directions in the same horizontal plane, for example configured to obtain velocity measurement data in two orthogonal axis directions in a horizontal plane section defined by the arrangement of the at least three horizontally oriented geophones, and the obtained velocities for the two orthogonal axis directions may then be adjusted based on the approximation of the inclination of the horizontal plane section determined based on the velocity measurements by the at least three vertically oriented geophones.

In aspects and embodiments, the measurement system is configured to determine the current inclination of the horizontal plane section based on the measurement data obtained by each of the at least three vertically oriented geophones and continuously adjust the movement measurement data obtained by each of the at least three horizontally oriented geophones based on the determined current inclination of the horizontal plane section to thereby produce low-noise position data for the horizontal plane section. The low-noise position data for the horizontal plane section which is produced from the adjusted movement measurement data may then be the sole input data provided by the measurement system for continuously determining, under the assumption that the horizontal plane section does not move vertically, the current at least one of strain, stress and deformation induced in essentially any arbitrary position in the wind turbine tower structure.

In embodiments and embodiments, the low-noise position data for the horizontal plane section is the sole input data provided for continuously determining, under the assumption that the horizontal plane section does not move vertically, the current at least one of strain, stress and deformation induced in essentially any arbitrary position in the wind turbine tower structure in that at least one of the computer control system and an external located system is configured to obtain a structural model of the wind turbine system; identify at least one of known force and eigenmode movements from the measurement data including the low-noise position data and tilt data for the horizontal plane section; and superimpose the known solution from the structural model to accurately determine at least one of strain, stress and deformation of any arbitrary position of the wind turbine tower structure.

In embodiments, the technology disclosed relates to the structural monitoring of wind power installations and to the monitoring of wind turbine towers by continuously obtaining measurement data used for continuously determining producing dynamic data for the two-dimensional horizontal position and inclination of a horizontal plane determined by the locations of at least three horizontally oriented geophones and at least one tilt sensor or vertically oriented geophone arranged in substantially the same horizontal plane in the wind turbine tower. The at least three measurement units are typically configured for measuring their respective movements, e.g. velocities and/or displacements, and the at least one tilt sensor or vertically oriented geophone is/are configured for determining the current inclination of the horizontal plane defined essentially by the arrangement and mounting positions of the at least three measurement units in the wind turbine tower.

In embodiments, the measurement system comprises three or more sensor units/nodes arranged in the same plane and where each node contains at least one horizontal geophone and one vertical geophone. For the inventive concept of the technology disclosed, three or more nodes are required to be able to correct the horizontal geophones with the vertical ones. The vertical geophones are typically placed in the nodes. The vertical geophones in the various nodes are used to measure the inclination of the plane they are in, then all the horizontal geophones (which are also in the nodes) are corrected with that information. It is thus the system of nodes that is used and it requires very good synchronization between the nodes.

In various embodiments, each of the three or more nodes typically contains at least one vertical geophone and two horizontal geophones. The vertical geophones in the various nodes are used to measure the tilt of the plane they sit in, then all horizontal geophones are corrected with that information. It requires very good synchronization between the nodes so that each node's at least two horizontal geophones are corrected with plane tilt data collected from each of the at least three vertical geophones.

In embodiments, the measurement system comprises three or more sensors/nodes arranged in the same plane and where each node contains two horizontally oriented geophones (biaxial geophone), one vertically oriented geophone and a tilt sensor. The velocity/movement measurement data continuously obtained by each of the at least three vertically oriented geophones are used for determining the inclination and for adjusting the movement measurement data obtained by the horizontally oriented geophones (which are typically placed in the same nodes as the vertical ones), for example in the frequencies above a certain cut-off frequency. The cut-off frequency is typically in the range 0.1-0.3Hz and is often around 0.2Hz. Below this frequency cut-off point, the tilt sensor is used instead, as the precision for tilt measurement with the geophones becomes worse with lower frequency, while the tilt sensor becomes better (as well as being capable of static measurements for which the velocity measurements obtained by geophones cannot be used).

In embodiments, the method of the technology disclosed comprises applying a high-pass filter to the measurement data to filter out the frequencies of the measurement data above the cut-off frequency used for the vertically oriented geophone at each node, and applying a low-pass filter to the measurement data to filter out the frequencies of the measurement data below the cut-off frequency used for the tilt sensor in the same node, and that the use of a tilt sensor in the same node gives the technical effect of better/more accurate estimates of the dynamic strain in all parts of the tower through more accurate calculations of the inclination of the horizontal plane section by allowing that tilt data from the tilt sensor which represents the quasi-static response of the tower (below 0.2 Hz, as well as static responses) is included in the input data when determining the inclination of the horizontal plane section.

In very low frequency areas, the tilt sensor works better than the vertical geophones to determine the inclination of the horizontal plane section. Therefore, in these low frequency areas, tilt data should be used instead of vertical movement data for adjusting the movement measurement data obtained by the horizontally oriented geophones, alternatively one could even use the information from the tilt sensor alone as it is below all eigenmodes for the tower, and then maybe this is sufficient input data for the calculations.

Static measurements by use of tilt sensors may additionally be used for identifying static stresses in the tower, for example wind will give a static force in one direction and then the tower will statically tilt a little in the same direction as the wind. It must then be added to the dynamic voltage we calculate in higher frequencies with the vertically oriented geophones. Geophones are not static meters and therefore cannot measure statically (static is in theory frequency 0, which does not exist in reality, but geophones have a lower frequency limit which the tilt sensor does not).

It is always the inclination that is used to calculate the lateral acceleration of the geophone from the gravity vector (that is, the force of gravity that is directed in one direction on a tilted geophone, which is the one that you want to compensate for and only keep the lateral movement). The only difference between the tilt sensor and the vertically oriented geophones is when the vertically oriented geophones are better or when the tilt sensor is better for this purpose.

The reason that the vertically oriented geophones cannot be used below the cut-off frequency is that the noise levels become too high in the geophones at one level. This happens faster for the geophones whose movement measurement data, or velocity data, is adjusted/compensated for (the vertically oriented geophones) because the data from these must be integrated twice. Typically, the tilt sensor is only used below the frequency that is the cut-off frequency (in the range 0.1 to 0.3 Hz), even if you could perhaps compensate the horizontal geophones a little more with data from the tilt sensor. Below the cut-off point, there are typically no strange eigenmode bends in the tower, so then the information from the tilt sensor is generally sufficient without interfering with the vertically oriented geophones, i.e. the tilt is sufficient information in these frequencies.

The technology disclosed relates to the structural monitoring of wind power installations and to the monitoring of wind turbine towers by continuously obtaining low-noise measurement data for continuously producing dynamic data for the two-dimensional horizontal position and inclination of a horizontal plane determined by the locations of at least three measurement and at least one tilt sensor or vertically oriented geophone arranged in substantially the same horizontal plane in the wind turbine tower. The at least three measurement units are typically configured for measuring their respective movements, e.g. velocities and/or displacements, and the at least one tilt sensor or vertically oriented geophone is/are configured for determining the current inclination of the horizontal plane defined essentially by the arrangement and mounting positions of the at least three measurement units in the wind turbine tower.

The technology disclosed further relates to a measurement system comprising at least three measurement units all arranged in the same horizontal plane of the wind turbine tower and used for measuring the movements and/or displacements of a horizontal plane essentially determined by the mounting positions of the at least three measurement units and at least one tilt sensor or vertically oriented geophone for determining the current tilt or inclination of the same horizontal plane and arranged in substantially the same horizontal plane as the at least three measurement units.

The technology disclosed enables a low-noise measurement system in that each of the at least three measurement units is located in substantially the same horizontal plane, or horizontal plane section, of the wind turbine tower. The important benefits of arranging the at least three measurement units in substantially the same horizontal plane are achieved when measurement data obtained by the at least three measurement units is combined with tilt data for the horizontal plane essentially determined by the location of the at least three measurement units where the tilt or inclination of the horizontal plane is obtained by at least one tilt sensor or vertically oriented geophone arranged in the same horizontal plane. The movement measurement data obtained by the at least three measurement units and the tilt data obtained by the at least one tilt sensor or vertically oriented geophone may be used for continuously producing extremely low noise, dynamic data for determining the inclination and horizontal displacement of the horizontal plane in two dimensions.

The measurement system and methods of the technology disclosed may typically be designed and operate under the assumption that the horizontal plane section in the wind turbine tower, which is essentially determined by the locations/mounting positions of the at least three measurement units, does not substantially move vertically, and that the movement measurement data obtained by each of the at least three measurement units may be used, after adjustment or compensation for the current inclination of the horizontal plane, for determining the horizontal displacement of the horizontal plane, or horizontal plane section, in two dimensions. The at least one tilt sensor or vertically oriented geophone may then be configured to determine the current inclination of the horizontal plane, or horizontal plane section, in two dimensions and the current inclination of the horizontal plane, determined by the at least one tilt sensor or vertically oriented geophone may, in addition, be used by the computer control system for adjusting the movement measurement data or position data obtained by the at least three measurement units to be more accurate.

The data for position/displacement and tilt produced from the arrangement of the at least three measurement units, e.g. horizontally oriented geophones, and the use of at least one tilt sensor or vertically oriented geophone for determining the current inclination or tilt of the horizontal plane may significantly simplify calculations and enable, when combined with known structural force and eigenmode data, more accurate determining of strain, stress and/or deformation induced in essentially any arbitrary position of the wind turbine, or at least in essentially any arbitrary position of the wind turbine tower. The determining of strain, stress and/or deformation can be done by identifying known force and eigenmode movements from the measurement data and superpose the known solutions from the structural model of the wind turbine to obtain the complete solution with stress, strain and deformation.

In certain aspects of the technology disclosed, the at least three measurement units and the at least one tilt sensor or vertically oriented geophone are all arranged at a height level below 1/3 of the total height of the upright pillar structure of the wind turbine tower structure, thereby reducing the need for time consuming climbing high up in the tower and/or avoiding the shutting down of the wind turbine that produces undesired times of unavailability. By arranging the at least three measurement units and the at least one tilt sensor or vertically oriented geophone in substantially the same horizontal plane section, the measurement data obtained by the at least three measurement units and the at least one tilt sensor or vertically oriented geophone may be used for determining the position and inclination of a horizontal plane section essentially determined by the arrangement of the at least three measurement units. The position and inclination of the horizontal plane section may, in turn, be used as the sole input for accurately determining at least one of strain, stress and deformation of essentially any arbitrary position of the wind turbine structure.

The use of low noise position and tilt data for a horizontal plane defined by the arrangement of the at least three measurement units in the lower parts of the wind turbine tower combined with a tilt sensor or vertically oriented geophone in the same plane is enough for this type of analysis and avoids the mounting of measurement units or sensor equipment at many different heights and high up in the wind turbine tower to obtain the same information. The arrangement of the at least three measurement units in the same horizontal plane thus removes the need for sensor equipment in the upper parts of the wind turbine tower and avoids production stop during service or replacement of the measurement system.

Hence, the advantages of arranging the at least three measurement units, e.g. horizontally oriented geophones, in substantially the same substantially horizontal plane include that extremely low noise and dynamic measurement data for position and tilt over time may be obtained, yet avoiding the use of long cables and working high up in tower for maintenance or mounting of the geophones, which causes a temporary stop in production.

At least one of the at least three measurement units may be, or may include, a geophone which comprises an integrator that is used for directly converting velocity data into position data so that the at least one measurement is providing the position data for the horizontal plane section. The integrator, e.g. electrical integrator, may then be directly attached to the geophone.

At least one of the measurement units may be, or may comprise, a horizontally oriented geophone configured to measure the velocity of the mounting position in the horizontal direction. The measurement unit may, in addition to the horizontally oriented geophone or as an integral part of the horizontally oriented geophone, further comprise an integrator, e.g. electrical integrator, configured to covert the measured current velocity in the horizontal direction to a current position in the horizontal direction. The integrator may then be directly attached to the geophone.

At least one of the measurement units may be a biaxial geophone configured for both measuring the velocity in the horizontal direction and the inclination in the vertical direction of a horizontal plane section determined by the arrangement of the at least three measurement units. The biaxial geophone may then further comprise an integrator, e.g. electrical integrator, configured to covert the measured velocity in the horizontal direction to position in the horizontal direction. The integrator, e.g. electrical integrator, may then be directly attached to the geophone.

In aspects, the technology disclosed relates to a wind turbine for generating electrical energy in response to wind comprising at least three measurement units for continuously measuring and/or detecting movements, e.g. velocity and/or displacement, of their respective mounting position in the upright pillar structure of the wind turbine tower structure. According to the technology disclosed, the at least three measurement units are arranged in three separate mounting positions in substantially the same horizontal plane of the upright pillar structure and the measurement data.

In embodiments of the technology disclosed, the at least three measurement units and the at least one tilt sensor or vertically oriented geophone are arranged at a height level below 1/3 of the total height of the upright pillar structure of the wind turbine tower structure, thereby reducing the need for time consuming climbing high up in the tower and/or avoiding the shutting down of the wind turbine that produces undesired times of unavailability. The at least three measurement units may then be horizontally oriented geophones each configured to measure their own current movements, e.g. velocity and/or position, and the at least one tilt sensor or vertically oriented geophone is/are configured to determine the current inclination of a horizontal plane essentially determined by the arrangement of the at least three measurement units. According to various embodiments, a processing unit of the measurement system, or communicatively connected to the measurement system, is configured to determine the current position and inclination of a horizontal plane section essentially determined by the arrangement of the at least three measurement units based on the measurement data obtained by the at least three measurement units and the at least one tilt sensor or vertically oriented geophone. In embodiments and under the assumption that the horizontal plane section does not move in the vertical direction, the current horizontal position and inclination of the horizontal plane section, which is determined based on the measurement data obtained by the measurement units arranged in substantially same horizontal plane, may, in turn, be used for accurately determining at least one of strain, stress and deformation of essentially any arbitrary position of the wind turbine structure.

In certain embodiments of the technology disclosed, the measurement system comprises at least three horizontally oriented geophones and the at least one tilt sensor or vertically oriented geophone arranged at a height level below 1/3 of the total height of the upright pillar structure of the wind turbine tower structure, thereby reducing the need for time consuming climbing high up in the tower and/or avoiding the shutting down of the wind turbine that produces undesired times of unavailability. The at least three horizontally oriented geophones measurement units may then be each configured to measure their own current velocity and the at least one tilt sensor or vertically oriented geophone is/are configured to determine the current inclination of a horizontal plane essentially determined by the arrangement of the at least three measurement units.

According to various embodiments, a processing unit of the measurement system, or communicatively connected to the measurement system, is configured to determine the current position and inclination of a horizontal plane section essentially determined by the arrangement of the at least three horizontally oriented geophones based on the measurement data obtained by the at least three horizontally oriented geophones and the at least one tilt sensor or vertically oriented geophone. In embodiments and under the assumption that the horizontal plane section does not move in the vertical direction, the current horizontal position and inclination of the horizontal plane section, which is determined based on the measurement data obtained by the at least three horizontally oriented geophones and the at least one tilt sensor and/or vertically oriented geophone arranged in substantially same horizontal plane, may, in turn, be used for accurately determining at least one of strain, stress and deformation of essentially any arbitrary position of the wind turbine structure. Thus, the determining of at least one of strain, stress and deformation of essentially any arbitrary position of the wind turbine structure is based only on the position and tilt data for the horizontal plane section produced from the measurement data obtained by the at least three horizontally oriented geophones (movement/position data for the horizontal plane section) and the at least one tilt sensor and/or vertically oriented geophone (inclination of the horizontal plane section).

In embodiments, the technology disclosed relates to a wind turbine system for generating electrical energy in response to wind, the wind turbine system comprising: a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy; a computer control system configured to obtain measurement data based on measurements by the measurement units of the wind turbine; and
at least three measurement units each configured to continuously measure and/or detect the velocity, movement and/or displacement of their respective mounting position in the upright pillar structure, wherein the at least three measurement units are arranged in three separate mounting positions in substantially the same horizontal plane of the upright pillar structure.

In embodiments, the technology disclosed relates to the measuring of the movement of an essentially horizontal plane section defined by at least three measurement units arranged in the lower part of the wind turbine tower with the purpose of mapping all the movements in the wind turbine structure with help of mathematical models. The mapping of all movements in the wind turbine tower may then be determined solely based on the movement measurement data obtained by the at least three measurement units, e.g. at least three horizontally oriented geophones, in combination with the tilt data for the horizontal plane obtained by at least one tilt sensor or horizontally oriented geophone arranged in substantially the same horizontal plane section in the lower part of the wind turbine tower. The method according to the technology disclosed may then further comprise the steps of obtaining a structural model of the wind turbine structure, identifying at least one of known force and eigenmode movements from the continuously produced extremely low-noise measurement data for the current position and tilt of the horizontal plane section and superimposing the known solution from the structural model to accurately determine at least one of strain, stress and deformation of any arbitrary position of the wind turbine structure.

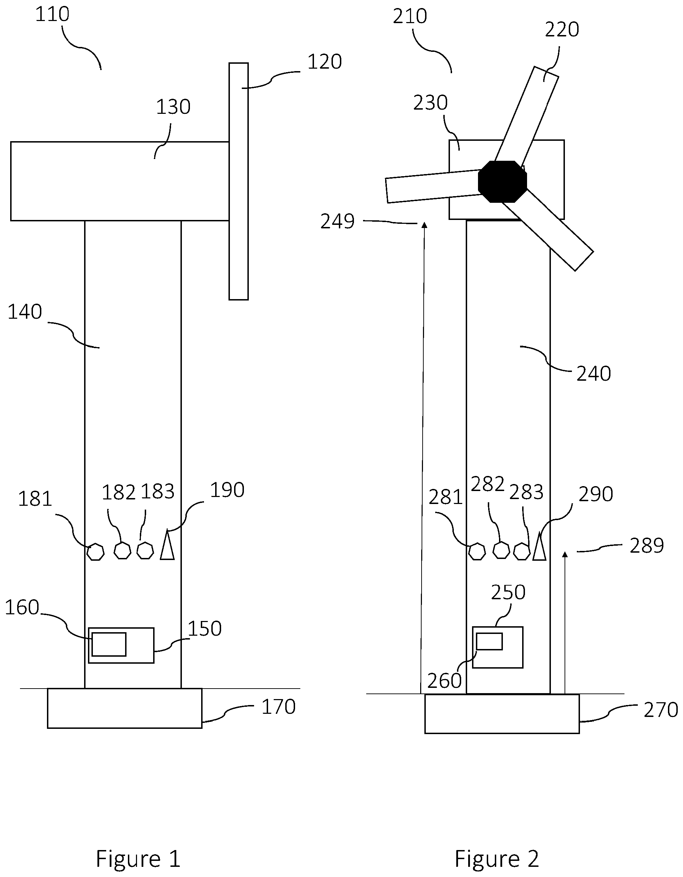

Figure 1 shows a schematic overview of an example embodiment of the wind turbine according to the technology disclosed. The wind turbine 110, 210 is depicted in a side view in Figure 1, and in a front view in Figure 2. The wind turbine 110, 210 comprises a wind turbine tower 140, 240 mounted on a foundation structure 170, 270, a rotor 120, 220, a nacelle 130, 230, a computer control system 150, 250 comprising a processing unit 160, 260, three measurements units 181, 182, 183, 281, 282, 283, and at least one tilt sensor or vertically oriented geophone 190, 290 for determining the inclination of a horizontal plane section determined by the arrangement of the three measurement units 181, 182, 183, 281, 282, 283.

The rotor 120, 220 is connected to nacelle 140, 240 via a rotor hub (not shown) at the centre or rotor rotational axis of rotor 120, 220 and the extension of the rotational axis in the nacelle 130, 230. The nacelle 130, 230 is mounted on top of the wind turbine tower 140, 240. In the present embodiment, the compute control system 150, 250 comprising a processing unit 160, 260 is located in the lower part of the wind turbine tower 140, 240 and is connected to the measurement units 181, 182, 183, 281, 282, 283, 190, 290 and/or other devices throughout the wind turbine. The processing unit 160, 260 may also be located in other parts of the wind turbine or in a separate processing device that may be connected with the wind turbine via a communication line.

According to this example embodiment, the computer control system 150, 250 comprising the processing unit 160, 260 is configured to obtain measurement values from the at least three measurements units 181, 182, 183, 281, 282, 283, and at least one tilt sensor or vertically oriented geophone 190, 290 and to determine the current position and inclination of a horizontal plane section from and based on these measurement values, e.g. based on the measured current velocities for the respective measurement unit 181, 182, 183, 281, 282, 283 and the inclination of the horizontal plane section determined by the at least one tilt sensor or vertically oriented geophone 190, 290.

According to the example embodiment shown in Figure 1 and Figure 2, the computer control system 150, 250 comprising the processing unit 160, 260 is further configured to provide the determined, e.g. calculated, current position and inclination of the horizontal plane section for further use, for instance by allowing to retrieve or receive the determined position and inclination the computer control system 150, 250 and the processing unit 160, 260 by an external computing system or by the processing and/or control unit that is connected to the computer control unit 150, 250 by a communication line (not shown). According to this embodiment and based on the determined current position and inclination of the horizontal plane section, an external computing system may then be configured to determine at least one of the current strain, stress and deformation of the wind turbine.

In this example embodiment and as illustrated in Figure 2, the at least three measurement units and the at least one tilt sensor or vertically oriented geophone are all arranged at a height level 289 which is below 1/3 of the total height 249 of the upright pillar structure of the wind turbine tower structure, thereby reducing the need for time consuming climbing high up in the tower and/or avoiding the shutting down of the wind turbine that produces undesired times of unavailability.

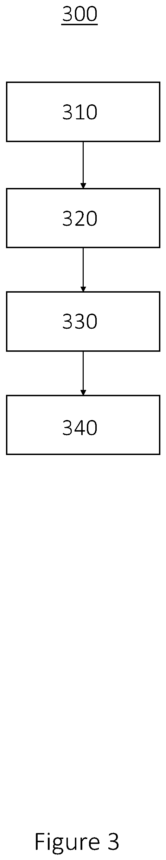

Figure 3 shows an embodiment of a method for producing low-noise position and tilt data.

Figure 3 schematically illustrates embodiments of the technology disclosed including a method (300) for producing low-noise position and tilt data, the method (300) comprising:
arranging (310) at least three measurement units in three separate mounting positions in substantially the same plane of the upright pillar structure;
obtaining (320), continuously by each of the at least three measurement units, movement measurement data for the respective measurement unit;
obtaining (330), continuously by at least one of a tilt sensor and a vertically oriented geophone arranged in substantially the same horizontal plane as the at least three measurement units, the current tilt data for the horizontal plane section determined essentially by the mounting positions of the at least three measurement units; and
determining (340), continuously by at least one of the computer control system and at least one of the at least three measurement units and based on the obtained movement measurement data and tilt data, the current position and tilt data for the horizontal plane section essentially determined by the arrangement of the at least three measurement units.

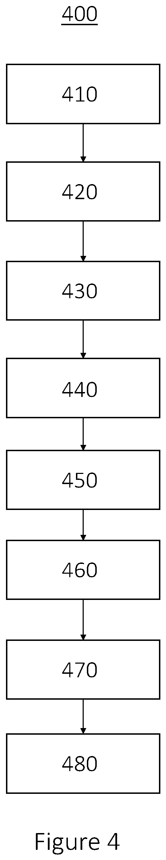

Figure 4 shows an embodiment of a method for determining at least one of strain, stress and deformation in a wind turbine.

Figure 4 schematically illustrates embodiments of the technology disclosed including a method (400) for determining at least one of strain, stress and deformation in a wind turbine, the method (400) comprising:
obtaining (410) a structural model of the wind turbine structure;
arranging (420) at least three measurement units in three separate mounting positions in substantially the same plane of the upright pillar structure;
obtaining (430), continuously by each of the at least three measurement units, movement measurement data for the respective measurement unit;
obtaining (440), continuously by at least one of a tilt sensor and a vertically oriented geophone arranged in substantially the same horizontal plane as the at least three measurement units, the current tilt data for a horizontal plane section determined essentially by the mounting positions of the at least three measurement units;
determining (450), continuously by at least one of the computer control system and at least one of the at least three measurement units and based on the obtained movement measurement data and tilt data, the current position and inclination for the horizontal plane section essentially determined by the arrangement of the at least three measurement units;
producing (460) extremely low-noise measurement data for the position and inclination of the horizontal plane section based on the obtained movement measurement data and tilt data;
identifying (470) at least one of known force and eigenmode movements from the produced extremely low-noise measurement data for at least one of position and tilt of the plane;and
superimpose (480) the known solution from the structural model to accurately determine at least one of strain, stress and deformation of any arbitrary position of the wind turbine structure.

The technology disclosed relates to the structural monitoring of a wind turbine system and to the monitoring of wind turbine towers using low-noise measurement data for providing dynamic data for position and tilt over time. In particular, the technology disclosed further relates to a measurement system comprising at least three measurement units for measuring their respective movements, e.g. velocities and/or displacements, and thereby the movements of a horizontal plane essentially determined by the mounting positions of the at least three measurement units and at least one tilt sensor or vertically oriented geophone for determining the current tilt or inclination of the same horizontal plane and which is/are arranged in substantially the same horizontal plane.

The measurement system may further include at least one processing unit for producing, based on the movement measurement data obtained by each of the respective at least three measurement units and the tilt data obtained by the at least one tilt sensor or vertically oriented geophone, data representing the position and tilt of the horizontal plane. In various embodiments of the technology disclosed, the at least one processing unit may be comprised in at least one of the at least three measurement units or may be comprised in a separate control unit of the measurement system which is communicatively coupled to the at least three measurement units.

In certain embodiments, at least one of the at least three measurement units or the control unit may then comprise means for transmitting the produced position and tilt data for the horizontal plane essentially determined by the mounting positions of the at least three measurement units to an external computer system configured to determine, based on the position and tilt data for the horizontal plane, at least one of the strain, stress, fatigue load/damage and deformation

In particular, the technology disclosed relates to the monitoring of a wind turbine using low-noise measurement data for producing dynamic data for position and tilt over time. The technology disclosed further relates to a measurement system comprising at least three measurement units for measuring the movements and/or displacements in a horizontal plane section essentially defined by the mounting positions of the at least three measurement units and a tilt sensor or vertically oriented geophone for determining the tilt of the horizontal plane section defined by the mounting positions of the at least three measurement units. processing unit for producing data representing the position and tilt of the virtual horizontal plane.

The arrangement of the at least three measurement units in accordance with the technology disclosed intends to provide extremely low noise and dynamic measurement data for position and tilt over time to thereby provide sufficiently accurate measurement data for obtaining the movements in essentially any position of the wind turbine tower, yet avoiding the use of long cables and working high up in tower for maintenance or mounting of the measurement units, which may cause a temporary stop in production.

In aspects, the inventive concept of the technology disclosed combines the intelligent arrangement and mounting of the measurement units in substantially the same plane with mathematical models and pre-known knowledge about structural forces and eigenmode data to map movements and/or displacements in the wind turbine tower measured by each of the at least three measurements units for the purpose of obtaining or calculating strain data in any arbitrary position of the wind turbine tower covered by a structural model.

In embodiments, the at least three measurement units essentially defining the substantially horizontal plane section are mutually separated by a height difference which is less than 10 % of the inner diameter of the of the upright pillar structure of the wind turbine tower structure at the height level where the at least three measurement units are mounted.

In embodiments, the inner diameter of the pillar structure at the height level where the at least three measurement units are mounted is within a diameter range of 5 to 10 meters and the difference in mutual height between each pair of the at least three measurement units is less than 5 decimeters. The computer control system may then be configured to adjust and combine the measurement data obtained by the at least three measurement units to produce extremely low-noise measurement data for determining the current horizontal position and/or movement for a substantially horizontal plane section defined essentially by the arrangement of the at least three measurement units.

In embodiments, the inner diameter of the pillar structure at the height level where the at least three measurement units are mounted is within a range of 2 to 7 meters and the difference in mutual height between each pair of the at least three measurement units is less than 0.2 decimeters to thereby produce extremely low-noise measurement data for determining, by the computer control system, the current horizontal position and tilt for the horizontal plane or horizontal plane section substantially defined by the arrangement of the at least three measurement units, thereby significantly simplifying calculations and enabling accurate determining of at least one of strain, stress and deformation induced in essentially any arbitrary position of the wind turbine tower structure.

In embodiments, each of the at least three measurement units comprises a horizontally oriented geophone configured to measure and/or detect the velocity for their respective mounting position. The computer control system and/or at least one of the measurement units may then be configured to use that the horizontally oriented geophones are arranged in substantially the same horizontal plane to continuously determine the current horizontal position for a substantially horizontal plane or horizontal plane section defined essentially by the arrangement of the at least three horizontally oriented geophones.

In embodiments, at least one of the at least three measurement units comprises, in addition to a horizontally oriented geophone, at least one tilt sensor and/or vertically oriented geophone arranged in essentially the same horizontal plane as the at least three measurements units, wherein the detections and/or measurements by the at least one tilt sensor and/or vertically oriented geophone indicate the current tilt of the substantially horizontal plane or horizontal plane section.

In embodiments, the computer control system and/or at least one of the at least three measurement units is/are configured to, based on the current tilt of the horizontal plane section determined by the detections and/or measurements by the at least one tilt sensor and/or vertically oriented geophone, dynamically adjust and/or compensate for the tilt of the horizontally oriented geophones to thereby provide improved measurement data indicating a more accurate current velocity for each of the at least three mounting positions for the at least three measurement units

In embodiments, the at least three measurement units are arranged on the inner surface of the substantially cylindrical cross-section structure and are mutually separated by a radial distance between each pair which is more than 5 decimeters.

In embodiments, the at least three measurement units are arranged at a height level below 1/3 of the total height of the upright pillar structure of the wind turbine tower structure, thereby reducing the need for time consuming climbing high up in the tower and/or avoiding the shutting down of the wind turbine that produces undesired times of unavailability.

In embodiments, the at least three measurement units are arranged at a height level below 1/4 of the total height of the upright pillar structure of the wind turbine tower structure, thereby reducing the need for time consuming climbing high up in the tower and/or avoiding the shutting down of the wind turbine that produces undesired times of unavailability.

In embodiments, the at least three measurement units are arranged at a height level below 1/5 of the total height of the upright pillar structure of the wind turbine tower structure, thereby reducing the need for time consuming climbing high up in the tower and/or avoiding the shutting down of the wind turbine that produces undesired times of unavailability.

In embodiments, the at least three measurement units are arranged at a height level below 1/6 of the height position of the rotor of the wind turbine, thereby reducing the need for time consuming climbing high up in the tower and/or avoiding the shutting down of the wind turbine that produces undesired times of unavailability.

In embodiments, the at least three measurement units are arranged at a height level less than 30 meters above the foundation structure, thereby reducing the need for time consuming climbing high up in the tower and/or avoiding the shutting down of the wind turbine that produces undesired times of unavailability.

In embodiments, the at least three measurement units are arranged at a height level less than 25 meters above the foundation structure, thereby reducing the need for time consuming climbing high up in the tower and/or avoiding the shutting down of the wind turbine that produces undesired times of unavailability.

In embodiments, the technology disclosed relates to a method producing low-noise position and tilt data, the method (300) comprising:
arranging at least three measurement units in three separate mounting positions in substantially the same plane of the upright pillar structure;
obtaining, continuously by each of the at least three measurement units, movement measurement data for the respective measurement unit;
obtaining, continuously by at least one of a tilt sensor and a vertically oriented geophone arranged in substantially the same horizontal plane as the at least three measurement units, the current tilt data for the horizontal plane section determined essentially by the mounting positions of the at least three measurement units; and
determining, continuously by at least one of the computer control system and at least one of the at least three measurement units and based on the obtained movement measurement data and tilt data, the current position and tilt data for the horizontal plane section essentially determined by the arrangement of the at least three measurement units.

In embodiments, the technology disclosed relates to a method for providing measurement data for determining at least one of strain, stress and deformation in essentially any arbitrary position of the wind turbine tower structure of a wind turbine system comprising a foundation structure and an upright pillar structure having a substantially cylindrical and at least partially hollow cross-section structure, the wind turbine system further comprising a computer control system and a rotor configured to rotate in response to wind and which is supported by the wind turbine tower structure, the method comprising:
arranging at least three measurement units in three separate mounting positions in substantially the same plane of the upright pillar structure;
obtaining, continuously by each of the at least three measurement units, movement measurement data;
obtaining, continuously by at least one of a tilt sensor and a vertically oriented geophone arranged in substantially the same horizontal plane as the at least three measurement units, the current tilt of an imaginary horizontal plane section determined essentially by the mounting positions of the at least three measurement units; and
determining, continuously by at least one of the computer control system and at least one of the at least three measurement units, the current position and tilt data for the horizontal plane, or
horizontal plane section, essentially determined by the arrangement of the at least three measurement units.

In embodiments, the technology disclosed relates to a method for providing measurement data for determining at least one of strain, stress and deformation in essentially any arbitrary position of the wind turbine tower structure of a wind turbine system comprising a foundation structure and an upright pillar structure having a substantially cylindrical and at least partially hollow cross-section structure, the wind turbine system further comprising a computer control system and a rotor configured to rotate in response to wind and which is supported by the wind turbine tower structure, the method comprising:
arranging at least three measurement units in three separate mounting positions in substantially the same plane of the upright pillar structure;
obtaining, continuously by each of the at least three measurement units, the velocity and/or position measurement data for their respective mounting position;
detecting and/or measuring, continuously by at least one of a tilt sensor and a vertically oriented geophone arranged in substantially the same horizontal plane as the at least three measurement units, the current tilt of a substantially horizontal plane or a horizontal plane section defined essentially by the mounting positions of the at least three measurement units; and
producing, by at least one of the computer control system and at least one of the at least three measurement units, position and tilt data for the horizontal plane or horizontal plane section essentially defined by the arrangement of the at least three measurement units.

In embodiments, the method further comprising adjusting, based on the detected and/or measured current tilt, the current velocity obtained by each of the at least three measurement units.

In embodiments, the method further comprising determining, based on the continuously adjusted velocity and/or position measurement data, the current horizontal velocity and/or position data for the substantially horizontal plane or horizontal plane section, wherein the current horizontal velocity and/or position for the substantially horizontal plane or horizontal plane section is determined by combining the adjusted velocity and/or position measurement data from each of the at least three measurement units to thereby provide improved and more accurate measurement data for determining at least one of strain, stress and deformation in essentially any arbitrary position of the wind turbine tower structure.

In embodiments, the method further comprising arranging the at least three measurement units so that they are mounted at a height level above the foundation structure which is below 1/3 of the total height of the upright pillar structure.

In embodiments, the method further comprising:
transmitting, continuously from the wind turbine system to an external computer control system, continuously updated measurement data indicating the current position and tilt data for the substantially horizontal plane or horizontal plane section essentially defined by the arrangement of the at least three measurement units.

In embodiments, the method further comprising:
determining, by at least one of an external system and the computer control system and by using the continuously produced position and tilt data for the substantially horizontal plane or horizontal plane section as the sole input, the current at least one of strain, stress and deformation induced in essentially any arbitrary position in the wind turbine tower.

In embodiments, each of the at least three measurement units comprises a horizontally oriented geophone arranged in substantially the same horizontal plane as the at least three measurement units and configured to measure at least one of velocity and movement for their respective mounting position, and the method further comprising:
measuring and/or detecting, continuously by each of the at least three horizontally oriented geophones, at least one of velocity and movement for their respective mounting position, wherein the current velocity and/or position measurement data obtained by the respective of the at least three measurement units is corresponding to or based on the current at least one of velocity and movement data measured by their respective horizontally oriented geophones.

In embodiments, the wind turbine system further comprises at least one tilt sensor and/or vertically oriented geophone arranged in essentially the same horizontal plane as the at least three measurements units, and the method is further comprising:
detecting and/or measuring, by the at least one tilt sensor and/or vertically oriented geophone, the current tilt of the horizontal plane section, and
adjusting, by continuously compensating for the current tilt of the horizontal plane section detected and/or measured by the at least one tilt sensor and/or vertically oriented geophone, the current velocity and/or position measurement data so that the velocity and/or position data used for determining the current at least one of strain, stress and deformation is more accurate.

In embodiments, the at least one tilt sensor and/or vertically oriented geophone is arranged in the same measurement unit and/or mounting position as at least one of the at least three measurement units, and the method further comprising detecting and/or measuring the tilt of the horizontal plane or horizontal plane section in at least two axis directions.

In embodiments, each of the at least three measurement units comprises both a horizontally oriented geophone and a vertically oriented geophone, wherein the vertically oriented geophone is used for determining the tilt of the horizontal plane section.

In embodiments, the measurement data for determining the current at least one of strain, stress and deformation corresponds to or is based on the produced position and tilt data for the horizontal plane or horizontal plane section essentially defined by the arrangement of the at least three measurement units, the method further comprising:
identifying, by the computer control system, eigen frequencies from the measurement data for at least one of position and tilt of the horizontal plane section, and
transmitting, from the computer control system to an external system, the identified eigen frequencies.

In embodiments, the measurement data for determining the current at least one of strain, stress and deformation comprises at least one of position and tilt for the horizontal plane section, and the method further comprising:
obtaining a structural model of the wind turbine system;
identifying at least one of force and eigenmode movements from the measurement data including the produced position and tilt for the horizontal plane or horizontal plane section; and
superimpose the known solution from the structural model to accurately determine at least one of strain, stress and deformation of any arbitrary position of the wind turbine tower structure.

In embodiments, the technology disclosed relates to a method for producing low noise dynamic data for position and tilt over time adapted to be used for determining at least one of strain, stress and deformation of a wind turbine structure comprising a foundation structure, an upright pillar structure having a substantially cylindrical and at least partially hollow cross-section structure, and a rotor which is supported by the wind turbine tower, comprising:
arranging at least three low-noise measurement units, e.g. horizontally oriented geophones, at a height level above the foundation structure and in substantially the same horizontal plane of the upright pillar structure;
obtaining, continuously by the at least three low-noise measurement units, the current movement measurement data for their respective mounting positions in the same horizontal plane;
arranging at least one tilt sensor and/or vertically oriented geophone in substantially the same horizontal plane as the at least three measurement units;
obtaining, continuously by the at least one tilt sensor and/or vertically oriented geophone, the current tilt or inclination of the horizontal plane defined by the at least three measurement units; and
continuously producing extremely low-noise measurement data for the current position and tilt of the horizontal plane based on said obtained movement measurement data and said obtained tilt data;

In embodiments, the method according to the technology disclosed may further comprise the steps of obtaining a structural model of the wind turbine structure, identifying at least one of known force and eigenmode movements from the continuously produced extremely low-noise measurement data for the current position and tilt of the horizontal plane and superimposing the known solution from the structural model to accurately determine at least one of strain, stress and deformation of any arbitrary position of the wind turbine structure.

In embodiments, the technology disclosed relates to a method for determining at least one of strain, stress and deformation in a wind turbine, the method comprising:
obtaining a structural model of the wind turbine structure;
arranging at least three measurement units in three separate mounting positions in substantially the same plane of the upright pillar structure;
obtaining, continuously by each of the at least three measurement units, movement measurement data for the respective measurement unit;
obtaining, continuously by at least one of a tilt sensor and a vertically oriented geophone arranged in substantially the same horizontal plane as the at least three measurement units, the current tilt data for a horizontal plane section determined essentially by the mounting positions of the at least three measurement units;
determining, continuously by at least one of the computer control system and at least one of the at least three measurement units and based on the obtained movement measurement data and tilt data, the current position and inclination for the horizontal plane section essentially determined by the arrangement of the at least three measurement units;
   producing extremely low-noise measurement data for the position and inclination of the horizontal plane section based on the obtained movement measurement data and tilt data;
   identifying at least one of known force and eigenmode movements from the produced extremely low-noise measurement data for at least one of position and tilt of the plane;and
   superimpose the known solution from the structural model to accurately determine at least one of strain, stress and deformation of any arbitrary position of the wind turbine structure.

In embodiments, the technology disclosed relates to a method for determining at least one of strain, stress and deformation of a wind turbine structure comprising a foundation structure, an upright pillar structure having a substantially cylindrical and at least partially hollow cross-section structure, and a rotor which is supported by the wind turbine tower, comprising:
obtaining a structural model of the wind turbine structure;
arranging at least three low-noise measurement units at a height level above the foundation structure and in substantially the same plane on the inner surface of the substantially cylindrical cross-section structure of the upright pillar structure;
obtaining, continuously by the at least three low-noise measurement units, movement measurement data for their respective mounting position;
arranging at least one tilt sensor and/or vertically oriented geophone in substantially the same plane as the at least three measurement units;
obtaining, continuously by the at least one tilt sensor and/or vertically oriented geophone, the current tilt or inclination of the plane defined by the at least three measurement units;
producing extremely low-noise measurement data for at least one of position and tilt of the plane based on said obtained movement measurement data and said obtained tilt data;
identifying at least one of known force and eigenmode movements from said produced extremely low-noise measurement data for at least one of position and tilt of the plane; and
superimpose the known solution from the structural model to accurately determine at least one of strain, stress and deformation of any arbitrary position of the wind turbine structure.

In embodiments, the technology disclosed relates to a method for determining at least one of strain, stress and deformation of a wind turbine structure comprising a foundation structure, an upright pillar structure having a substantially cylindrical and at least partially hollow cross-section structure, and a rotor which is supported by the wind turbine tower, comprising:
obtaining a structural model of the wind turbine structure;
arranging at least three low-noise measurement units at a height level above the foundation structure and in substantially the same plane on the inner surface of the substantially cylindrical cross-section structure of the upright pillar structure;
obtaining, continuously by the at least three low-noise measurement units, movement measurement data for their respective mounting position;
arranging at least one tilt sensor and/or vertically oriented geophone in substantially the same plane as the at least three measurement units;
obtaining, continuously by the at least one tilt sensor and/or vertically oriented geophone, the current tilt or inclination of the plane defined by the at least three measurement units;
producing extremely low-noise measurement data for at least one of position and tilt of the plane based on said obtained movement measurement data and said obtained tilt data;
identifying at least one of known force and eigenmode movements from said produced extremely low-noise measurement data for at least one of position and tilt of the plane; and
superimpose the known solution from the structural model to accurately determine at least one of strain, stress and deformation of any arbitrary position of the wind turbine structure.

In embodiments, the technology disclosed relates to a wind turbine system for generating electrical energy in response to wind, comprising:
a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy;
at least three measurement units each configured to continuously measure and/or detect the velocity, movement and/or displacement of their respective mounting position in the upright pillar structure, wherein the at least three measurement units are arranged in three separate mounting positions in substantially the same horizontal plane of the upright pillar structure; and
at least one tilt sensor and/or vertically oriented geophone arranged in substantially the same horizontal plane as the at least three measurement units and configured to determine the inclination of a horizontal plane section determined by the mounting positions of the at least three measurement units.

In embodiments, the technology disclosed relates to a wind turbine system for generating electrical energy in response to wind, comprising:
a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy;
at least three horizontally oriented geophones each configured to continuously measure and/or detect the velocity, movement and/or displacement of their respective mounting position in the upright pillar structure, wherein the at least three horizontally oriented geophones are arranged in three separate mounting positions in substantially the same horizontal plane of the upright pillar structure; and
at least one tilt sensor and/or vertically oriented geophone arranged in substantially the same horizontal plane as the at least three measurement units and configured to determine the inclination of a horizontal plane section determined by the mounting positions of the at least three horizontally oriented geophones.

In embodiments, the technology disclosed relates to a wind turbine system for generating electrical energy in response to wind, comprising:
a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy;
at least three measurement units each comprising a horizontally oriented geophones attached to an electrical integrator and each configured to continuously measure the velocity of their respective mounting position and convert the measured velocity data into position data for determining the position of a horizontal plane section essentially determined by the arrangement of the at least three measurement units; and at least one tilt sensor and/or vertically oriented geophone arranged in substantially the same horizontal plane as the at least three measurement units and configured to determine the inclination of a horizontal plane section determined by the mounting positions of the at least three horizontally oriented geophones.

In embodiments, the technology disclosed relates to a wind turbine system for generating electrical energy in response to wind, comprising:
a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy;
at least three measurement units each comprising a horizontally oriented geophones attached to an electrical integrator and each configured to continuously measure the velocity of their respective mounting position and convert the measured velocity data into position data for determining the position of a horizontal plane section essentially determined by the arrangement of the at least three measurement units; and at least one tilt sensor and/or vertically oriented geophone arranged in substantially the same horizontal plane as the at least three measurement units and configured to determine the inclination of a horizontal plane section determined by the mounting positions of the at least three horizontally oriented geophones.

In embodiments, the technology disclosed relates to a wind turbine system for generating electrical energy in response to wind, comprising:
a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy;
at least three measurement units each comprising a horizontally oriented geophones attached to an electrical integrator and each configured to continuously measure the velocity of their respective mounting position and convert the measured velocity data into position data for determining the position of a horizontal plane section essentially determined by the arrangement of the at least three horizontally oriented geophones; at least one tilt sensor and/or vertically oriented geophone arranged in substantially the same horizontal plane as the at least three measurement units and configured to determine the inclination of a horizontal plane section determined by the mounting positions of the at least three horizontally oriented geophones; and a computer control system configured to obtain measurement data based on measurements by the measurement units of the wind turbine and the inclination of the horizontal plane section determined by the at least one tilt sensor and/or vertically oriented geophone.

In embodiments, the technology disclosed relates to a measurement system for producing position and tilt data adapted for determining the current at least one of strain, stress and deformation in a wind turbine, comprising: at least three measurement units each comprising a horizontally oriented geophones attached to an electrical integrator and each configured to continuously measure the velocity of their respective mounting position and convert the measured velocity data into position data for determining the position of a horizontal plane section essentially determined by the arrangement of the at least three horizontally oriented geophones; and at least one tilt sensor and/or vertically oriented geophone arranged in substantially the same horizontal plane as the at least three measurement units and configured to determine the inclination of a horizontal plane section determined by the mounting positions of the at least three horizontally oriented geophones.

In embodiments, the technology disclosed relates to a measurement system for producing position and tilt data adapted for determining the current at least one of strain, stress and deformation in a wind turbine, comprising:
at least three measurement units each comprising a horizontally oriented geophones attached to an electrical integrator and each configured to continuously measure the velocity of their respective mounting position and convert the measured velocity data into position data for determining the position of a horizontal plane section essentially determined by the arrangement of the at least three horizontally oriented geophones; at least one tilt sensor and/or vertically oriented geophone arranged in substantially the same horizontal plane as the at least three measurement units and configured to determine the inclination of a horizontal plane section determined by the mounting positions of the at least three horizontally oriented geophones; and a computer control system configured to obtain measurement data based on measurements by the measurement units of the wind turbine and the inclination of the horizontal plane section determined by the at least one tilt sensor and/or vertically oriented geophone.

In embodiments, the technology disclosed relates to a wind turbine system for generating electrical energy in response to wind, comprising:
a wind turbine tower structure comprising a foundation structure and an upright pillar structure having a substantially cylindrical and at least partially hollow cross-section structure;
a rotor, supported by the wind turbine tower, to rotate in response to wind, wherein in response to the rotation of the rotor, the wind turbine is configured to generate electrical energy;
at least three measurement units each configured to continuously measure and/or detect the velocity, movement and/or displacement of their respective mounting position in the upright pillar structure, wherein the at least three measurement units are arranged in three separate mounting positions in substantially the same horizontal plane of the upright pillar structure; at least one tilt sensor and/or vertically oriented geophone arranged in substantially the same horizontal plane as the at least three measurement units and configured to determine the inclination of a horizontal plane section determined by the mounting positions of the at least three measurement units; and a computer control system configured to obtain measurement data based on measurements by the measurement units of the wind turbine and the inclination of the horizontal plane section determined by the at least one tilt sensor and/or vertically oriented geophone.

In embodiments, the inner diameter of the pillar structure at the height level where the at least three measurement units are mounted is within a diameter range of 5 to 10 meters and the difference in mutual height between each pair of the at least three measurement units is less than 5 decimeters, and wherein the computer control system is configured to adjust and combine the measurement data obtained by the at least three measurement units is to produce extremely low-noise measurement data for determining the current horizontal position and/or movement for a substantially horizontal plane section defined essentially by the arrangement of the at least three measurement units.

In embodiments, the inner diameter of the pillar structure at the height level where the at least three measurement units are mounted is within a range of 2 to 7 meters and the difference in mutual height between each pair of the at least three measurement units is less than 0.2 decimeters to thereby produce extremely low-noise measurement data for determining, by the computer control system, the current horizontal position and tilt for the horizontal plane or horizontal plane section substantially defined by the arrangement of the at least three measurement units, thereby significantly simplifying calculations and enabling accurate determining of at least one of strain, stress and deformation induced in essentially any arbitrary position of the wind turbine tower structure.

In embodiments, each of the at least three measurement units comprises a horizontally oriented geophone configured to measure and/or detect the velocity for their respective mounting position.

In embodiments, the computer control system and/or at least one of the measurement units is/are configured to use that the horizontally oriented geophones are arranged in substantially the same horizontal plane to continuously determine the current horizontal position for a substantially horizontal plane or horizontal plane section defined essentially by the arrangement of the at least three horizontally oriented geophones.

In embodiments, at least one of the at least three measurement units comprises, in addition to a horizontally oriented geophone, at least one tilt sensor and/or vertically oriented geophone arranged in essentially the same horizontal plane as the at least three measurements units, and wherein the detections and/or measurements by the at least one tilt sensor and/or vertically oriented geophone indicate the current tilt of the substantially horizontal plane or horizontal plane section.

In embodiments, the controls system and/or at least one of the at least three measurement units is/are configured to, based on the current tilt of the horizontal plane section determined by the detections and/or measurements by the at least one tilt sensor and/or vertically oriented geophone, dynamically adjust and/or compensate for the tilt of the horizontally oriented geophones to thereby provide improved measurement data indicating a more accurate current velocity for each of the at least three mounting positions for the at least three measurement units.

In embodiments, the at least three measurement units are arranged on the inner surface of the substantially cylindrical cross-section structure and are mutually separated by a radial distance between each pair which is more than 5 decimeters.

In embodiments, the at least three measurement units are arranged at a height level below 1/4 of the total height of the upright pillar structure.

In embodiments, the at least three measurement units are arranged at a height level below 1/5 of the total height of the upright pillar structure.

In embodiments, the at least three measurement units are arranged at a height level below 1/6 of the height position of the rotor of the wind turbine.

In embodiments, the at least three measurement units are arranged at a height level less than 30 meters above the foundation structure.

In embodiments, the at least three measurement units are arranged at a height level less than 25 meters above the foundation structure.

## Claims

1. A wind turbine (110) system for generating electrical energy in response to wind, the wind turbine system comprising:
a wind turbine tower (140,240) structure comprising a foundation structure and an upright pillar structure (170) having a substantially cylindrical and at least partially hollow cross-section structure; a rotor (120), supported by the wind turbine tower, to rotate in response to wind, wherein in response to the rotation of the rotor, the wind turbine is configured to generate electrical energy; and a measurement system comprising at least three horizontally oriented geophones each configured to continuously obtain horizontal movement measurement data for their respective mounting position in the upright pillar structure and arranged in three separate mounting positions in substantially the same horizontal plane section of the upright pillar structure,
wherein said measurement system is further comprising at least three vertically oriented geophones (190,290) arranged in three separate mounting positions in the same horizontal plane section as the horizontally oriented geophones and each configured to continuously obtain vertical movement measurement data for their respective mounting position, and wherein said wind turbine system is further configured to:
determine the current direction and angle of inclination of the horizontal plane section based on vertical movement measurement data for the at least three mounting positions in the horizontal plane section obtained by each of the at least three vertically oriented geophones,
adjust, based on the determined current direction and angle of inclination of the horizontal plane section, the horizontal movement measurement data obtained by each of the at least three horizontally oriented geophones, and
determine the current at least one of strain, stress and deformation induced in essentially any arbitrary position in the wind turbine tower (140,240) structure based on the adjusted horizontal movement measurement data.

2. The wind turbine system of claim 1, wherein said wind turbine system is further configured to identify at least one of known force and eigenmode movements from the measurement data obtained, and then superimpose the known solution from the structural model to accurately determine at least one of strain, stress and deformation of any arbitrary position of the wind turbine tower structure.

3. The wind turbine system of any of claims 1 and 2, wherein said wind turbine system is further configured to identify at least one of known force and eigenmode movements from the continuously determined current direction and angle of inclination of the horizontal plane section and the horizontal movement measurement data continuously obtained by the at least three horizontally oriented geophones, and then superimpose the known solution from the structural model to accurately determine at least one of strain, stress and deformation of any arbitrary position of the wind turbine tower structure.

4. The wind turbine system of any of claims 1 to 3, wherein said measurement system is configured to continuously and synchronically transmit horizontal movement measurement data simultaneously obtained by the at least three horizontally oriented geophones, and wherein said measurement system is further configured to continuously and synchronically transmit vertical movement measurement data simultaneously obtained by the at least three vertically oriented geophones.

5. The wind turbine system of any of claims 4, wherein said wind turbine system is comprising a control system communicatively coupled to said measurement system and configured to continuously obtain and/or receive said vertical movement measurement data from the at least three vertically oriented geophones, and based on the continuously obtained or received at least three vertical movement measurement data and under the assumption that the horizontal plane section does not move in the vertical direction, determine the direction and angle of inclination of the horizontal plane section defined by the arrangement of the at least three horizontally oriented geophones.

6. The wind turbine system of any of the preceding claims, wherein each of said at least three vertically oriented geophones is configured to obtain movement measurement data, i.e. velocity data, in a higher frequency range above a certain frequency in a frequency range between 0.1 and 0.3 Hz.

7. The wind turbine system of any of the preceding claims, wherein said measurement system comprises at least three measurement units arranged in three separate mounting positions in the same horizontal plane section, and wherein each of said at least three measurement units comprises at least one vertically oriented geophone and at least one horizontally oriented geophone.

8. The wind turbine system of any of the preceding claims, wherein said measurement system further comprises at least three tilt sensors arranged in three separate mounting positions in substantially the same horizontal plane section as the at least three horizontally oriented geophones and the at least three vertically oriented geophones.

9. The wind turbine system of claim 8, wherein each of said at least three tilt sensors is configured to obtain tilt data in a quasi-static frequency range, thereby also including the quasi-static response of the tower when determining the direction and angle of inclination of the horizontal plane section defined by the arrangement of the at least three horizontally oriented geophones and the at least three vertically oriented geophones.

10. The wind turbine system of any of the preceding claims, wherein said measurement system comprises at least three measurement units arranged in three separate mounting positions in the same horizontal plane section, and wherein each of said at least three measurement units comprises at least one horizontally oriented geophone, at least one vertically oriented geophone and at least one tilt sensor.

11. The wind turbine system of any of the preceding claims, wherein the at least three horizontally oriented geophones are arranged at a height level above the foundation structure which is below 1/3 of the total height of the upright pillar structure of the wind turbine tower structure.

12. The wind turbine system of any of the preceding claims, wherein the normal axis of an approximately horizontal plane section essentially defined by the arrangement of the at least three horizontally oriented geophones is essentially parallel to the longitudinal axis of the upright pillar structure

13. Method for providing measurement data adapted for determining at least one of strain, stress and deformation in essentially any arbitrary position of the wind turbine tower structure of a wind turbine system comprising a foundation structure and an upright pillar structure having a substantially cylindrical and at least partially hollow cross-section structure, said wind turbine system further comprising a computer control system and a rotor configured to rotate in response to wind and which is supported by the wind turbine tower structure, said method comprising:
a. arranging at least three horizontally oriented geophones in three separate mounting positions in substantially the same horizontal plane of the upright pillar structure;
b. obtaining, continuously by each of the at least three horizontally oriented geophones, movement measurement data for their respective mounting position;
c. arranging at least three vertically oriented geophones in three separate mounting positions in substantially the same horizontal plane of the upright pillar structure as the at least three horizontally oriented geophones;
d. obtaining, continuously by each of at least three vertically oriented geophones, movement measurement data for their respective mounting position;
e. determining, based on the movement measurement data obtained by each of the at least three vertically oriented geophones, the current direction and angle of inclination of a horizontal plane section defined by the arrangement of the at least three horizontally oriented geophones;
f. adjusting, based on the determined current direction and angle of inclination of a horizontal plane section, the movement measurement data obtained by each of the at least three horizontally oriented geophones; and
g. determining, based on the adjusted movement measurement data, the current at least one of strain, stress and deformation induced in essentially any arbitrary position in the wind turbine tower structure.

14. The method of claim 13, further comprising identifying at least one of known force and eigenmode movements from the measurement data obtained, and then superimpose the known solution from the structural model to accurately determine at least one of strain, stress and deformation of any arbitrary position of the wind turbine tower structure.

15. The method of claim 13, further comprising identifying at least one of known force and eigenmode movements from the continuously determined current direction and angle of inclination of the horizontal plane section and the horizontal movement measurement data continuously obtained by the at least three horizontally oriented geophones, and then superimpose the known solution from the structural model to accurately determine at least one of strain, stress and deformation of any arbitrary position of the wind turbine tower structure.

16. The method of claim 13, further comprising identifying at least one of known force and eigenmode movements from the adjusted horizontal movement measurement data continuously obtained by the at least three horizontally oriented geophones, and then superimpose the known solution from the structural model to accurately determine at least one of strain, stress and deformation of any arbitrary position of the wind turbine tower structure.

17. The method of any of claims 13 to 16, further comprising synchronically transmitting, to a control system, horizontal movement measurement data simultaneously obtained by the at least three horizontally oriented geophones.

18. The method of any of claims 13 to 17, further comprising synchronically transmitting, to a control system, vertical movement measurement data simultaneously obtained by the at least three vertically oriented geophones.

19. The method of claim 18, further comprising continuously at least one of obtaining and receiving said vertical movement measurement data from the at least three vertically oriented geophones and, based on the continuously at least one of obtained and received at least three vertical movement measurement data, determining the direction and angle of inclination of the horizontal plane section defined by the arrangement of the at least three horizontally oriented geophones.

20. The method of claim 19, wherein said measurement system further comprises at least three tilt sensors and said method is further comprising continuously obtaining tilt data from the at least three tilt sensor and, based on both the tilt data obtained or received from the at least three tilt sensors and the vertical movement measurement data continuously obtained or received from the at least three vertically oriented geophones, determining the direction and angle of inclination of the horizontal plane section defined by the arrangement of the at least three horizontally oriented geophones.

21. The method of any of claims 13 to 20, said method is further comprising:
obtaining a structural model of the wind turbine system;
identifying at least one of force and eigenmode movements from said measurement data; and
superimposing the known solution from the structural model to accurately determine at least one of strain, stress and deformation of any arbitrary position of the wind turbine tower structure.

22. The method of any of claims 13 to 21, said method is further comprising:
obtaining a structural model of the wind turbine system;
identifying at least one of force and eigenmode movements from the continuously determined current direction and angle of inclination of the horizontal plane section and
the horizontal movement measurement data continuously obtained by the at least three horizontally oriented geophones; and
superimposing the known solution from the structural model to accurately determine at least one of strain, stress and deformation of any arbitrary position of the wind turbine tower structure.

## Patentansprüche

1. Windturbinensystem (110) zum Erzeugen elektrischer Energie als Reaktion auf Wind, das Windturbinensystem umfassend:
eine Windturbinenturmstruktur (140, 240), die eine Fundamentstruktur und eine aufrechte Säulenstruktur (170) umfasst, die eine im Wesentlichen zylindrische und zumindest teilweise hohle Querschnittsstruktur aufweist;
einen Rotor (120), der von dem Windturbinenturm getragen wird, um sich als Reaktion auf Wind zu drehen, wobei als Reaktion auf die Drehung des Rotors die Windturbine ausgebildet ist, elektrische Energie zu erzeugen; und ein Messsystem, das mindestens drei horizontal ausgerichtete Geophone umfasst, die jeweils ausgebildet sind, kontinuierlich horizontale Bewegungsmessdaten für ihre jeweilige Montageposition in der aufrechten Säulenstruktur zu erhalten, und die in drei getrennten Montagepositionen in im Wesentlichen demselben horizontalen Ebenenabschnitt der aufrechten Säulenstruktur angeordnet sind, wobei das Messsystem weiter mindestens drei vertikal ausgerichtete Geophone (190, 290) umfasst, die in drei getrennten Montagepositionen in demselben horizontalen Ebenenabschnitt wie die horizontal ausgerichteten Geophone angeordnet sind und jeweils ausgebildet sind, kontinuierlich vertikale Bewegungsmessdaten für ihre jeweilige Montageposition zu erhalten, und wobei das Windturbinensystem weiter ausgebildet ist:
die aktuelle Richtung und den aktuellen Neigungswinkel des horizontalen Ebenenabschnitts, basierend auf vertikalen Bewegungsmessdaten für die mindestens drei Montagepositionen in dem horizontalen Ebenenabschnitt, zu bestimmen, die von jedem der mindestens drei vertikal ausgerichteten Geophone erhalten werden,
basierend auf der bestimmten aktuellen Richtung und dem bestimmten aktuellen Neigungswinkel des horizontalen Ebenenabschnitts die von jedem der mindestens drei horizontal ausgerichteten Geophone erhaltenen horizontalen Bewegungsmessdaten anzupassen, und
das aktuelle mindestens eine von Dehnung, Spannung und Verformung zu bestimmen, die in im Wesentlichen jeder beliebigen Position in der Windturbinenturmstruktur (140, 240) induziert wird, basierend auf den angepassten horizontalen Bewegungsmessdaten.

2. Windturbinensystem nach Anspruch 1, wobei das Windturbinensystem weiter ausgebildet ist, mindestens eine von bekannter Kraft und Eigenformbewegungen aus den erhaltenen Messdaten zu identifizieren und dann die bekannte Lösung aus dem Strukturmodell zu überlagern, um mindestens eine von Dehnung, Spannung und Verformung einer beliebigen Position der Windturbinenturmstruktur genau zu bestimmen.

3. Windturbinensystem nach einem der Ansprüche 1 und 2, wobei das Windturbinensystem weiter ausgebildet ist, mindestens eine von bekannter Kraft und Eigenformbewegungen aus der kontinuierlich bestimmten aktuellen Richtung und dem kontinuierlich bestimmten aktuellen Neigungswinkel des horizontalen Ebenenabschnitts und den horizontalen Bewegungsmessdaten, die kontinuierlich von den mindestens drei horizontal ausgerichteten Geophonen erhalten werden, zu identifizieren und dann die bekannte Lösung aus dem Strukturmodell zu überlagern, um mindestens eine von Dehnung, Spannung und Verformung einer beliebigen Position der Windturbinenturmstruktur genau zu bestimmen.

4. Windturbinensystem nach einem der Ansprüche 1 bis 3, wobei das Messsystem ausgebildet ist, kontinuierlich und synchron horizontale Bewegungsmessdaten zu übertragen, die gleichzeitig von den mindestens drei horizontal ausgerichteten Geophonen erhalten werden, und wobei das Messsystem weiter ausgebildet ist, kontinuierlich und synchron vertikale Bewegungsmessdaten zu übertragen, die gleichzeitig von den mindestens drei vertikal ausgerichteten Geophonen erhalten werden.

5. Windturbinensystem nach Anspruch 4, wobei das Windturbinensystem ein Steuerungssystem umfasst, das kommunikativ mit dem Messsystem gekoppelt ist und ausgebildet ist, kontinuierlich die vertikalen Bewegungsmessdaten von den mindestens drei vertikal ausgerichteten Geophonen zu erhalten und/oder zu empfangen, und, basierend auf den kontinuierlich erhaltenen oder empfangenen mindestens drei vertikalen Bewegungsmessdaten und unter der Annahme, dass sich der horizontale Ebenenabschnitt nicht in der vertikalen Richtung bewegt, die Richtung und den Neigungswinkel des horizontalen Ebenenabschnitts zu bestimmen, der durch die Anordnung der mindestens drei horizontal ausgerichteten Geophone definiert ist.

6. Windturbinensystem nach einem der vorstehenden Ansprüche, wobei jedes der mindestens drei vertikal ausgerichteten Geophone ausgebildet ist, Bewegungsmessdaten, d. h. Geschwindigkeitsdaten, in einem höheren Frequenzbereich oberhalb einer bestimmten Frequenz in einem Frequenzbereich zwischen 0,1 und 0,3 Hz zu erhalten.

7. Windturbinensystem nach einem der vorstehenden Ansprüche, wobei das Messsystem mindestens drei Messeinheiten umfasst, die in drei getrennten Montagepositionen in demselben horizontalen Ebenenabschnitt angeordnet sind, und wobei jede der mindestens drei Messeinheiten mindestens ein vertikal ausgerichtetes Geophon und mindestens ein horizontal ausgerichtetes Geophon umfasst.

8. Windturbinensystem nach einem der vorstehenden Ansprüche, wobei das Messsystem weiter mindestens drei Neigungssensoren umfasst, die in drei getrennten Montagepositionen in im Wesentlichen demselben horizontalen Ebenenabschnitt wie die mindestens drei horizontal ausgerichteten Geophone und die mindestens drei vertikal ausgerichteten Geophone angeordnet sind.

9. Windturbinensystem nach Anspruch 8, wobei jeder der mindestens drei Neigungssensoren ausgebildet ist, Neigungsdaten in einem quasi-statischen Frequenzbereich zu erhalten, wodurch beim Bestimmen der Richtung und des Neigungswinkels des horizontalen Ebenenabschnitts, der durch die Anordnung der mindestens drei horizontal ausgerichteten Geophone und der mindestens drei vertikal ausgerichteten Geophone definiert ist, auch die quasi-statische Antwort des Turms eingeschlossen wird.

10. Windturbinensystem nach einem der vorstehenden Ansprüche, wobei das Messsystem mindestens drei Messeinheiten umfasst, die in drei getrennten Montagepositionen in demselben horizontalen Ebenenabschnitt angeordnet sind, und wobei jede der mindestens drei Messeinheiten mindestens ein horizontal ausgerichtetes Geophon, mindestens ein vertikal ausgerichtetes Geophon und mindestens einen Neigungssensor umfasst.

11. Windturbinensystem nach einem der vorstehenden Ansprüche, wobei die mindestens drei horizontal ausgerichteten Geophone auf einem Höhenniveau oberhalb der Fundamentstruktur angeordnet sind, das unter 1/3 der Gesamthöhe der aufrechten Säulenstruktur der Windturbinenturmstruktur liegt.

12. Windturbinensystem nach einem der vorstehenden Ansprüche, wobei die Normalenachse eines annähernd horizontalen Ebenenabschnitts, der im Wesentlichen durch die Anordnung der mindestens drei horizontal ausgerichteten Geophone definiert ist, im Wesentlichen parallel zu der Längsachse der aufrechten Säulenstruktur ist.

13. Verfahren zum Bereitstellen von Messdaten, angepasst zum Bestimmen mindestens einer von Dehnung, Spannung und Verformung in im Wesentlichen jeder beliebigen Position der Windturbinenturmstruktur eines Windturbinensystems, das eine Fundamentstruktur und eine aufrechte Säulenstruktur umfasst, die eine im Wesentlichen zylindrische und zumindest teilweise hohle Querschnittsstruktur aufweist, wobei das Windturbinensystem weiter ein Computersteuerungssystem und einen Rotor umfasst, der ausgebildet ist, sich als Reaktion auf Wind zu drehen, und der von der Windturbinenturmstruktur getragen wird, wobei das Verfahren umfasst:
a. Anordnen von mindestens drei horizontal ausgerichteten Geophonen in drei getrennten Montagepositionen in im Wesentlichen derselben horizontalen Ebene der aufrechten Säulenstruktur;
b. kontinuierliches Erhalten von Bewegungsmessdaten für ihre jeweilige Montageposition durch jedes der mindestens drei horizontal ausgerichteten Geophone;
c. Anordnen von mindestens drei vertikal ausgerichteten Geophonen in drei getrennten Montagepositionen in im Wesentlichen derselben horizontalen Ebene der aufrechten Säulenstruktur wie die mindestens drei horizontal ausgerichteten Geophone;
d. kontinuierliches Erhalten von Bewegungsmessdaten für ihre jeweilige Montageposition durch jedes von mindestens drei vertikal ausgerichteten Geophonen;
e. Bestimmen der aktuellen Richtung und des aktuellen Neigungswinkels eines horizontalen Ebenenabschnitts, der durch die Anordnung der mindestens drei horizontal ausgerichteten Geophone definiert ist, basierend auf den Bewegungsmessdaten, die von jedem der mindestens drei vertikal ausgerichteten Geophone erhalten werden;
f. Anpassen der Bewegungsmessdaten, die von jedem der mindestens drei horizontal ausgerichteten Geophone erhalten werden, basierend auf der bestimmten aktuellen Richtung und dem bestimmten aktuellen Neigungswinkel eines horizontalen Ebenenabschnitts; und
g. Bestimmen der aktuellen mindestens einen von Dehnung, Spannung und Verformung, die in im Wesentlichen jeder beliebigen Position in der Windturbinenturmstruktur induziert wird, basierend auf den angepassten Bewegungsmessdaten.

14. Verfahren nach Anspruch 13, weiter umfassend das Identifizieren mindestens einer von bekannter Kraft und Eigenformbewegungen aus den erhaltenen Messdaten und dann das Überlagern der bekannten Lösung aus dem Strukturmodell, um mindestens eine von Dehnung, Spannung und Verformung einer beliebigen Position der Windturbinenturmstruktur genau zu bestimmen.

15. Verfahren nach Anspruch 13, weiter umfassend das Identifizieren mindestens einer von bekannter Kraft und Eigenformbewegungen aus der kontinuierlich bestimmten aktuellen Richtung und dem kontinuierlich bestimmten aktuellen Neigungswinkel des horizontalen Ebenenabschnitts und den horizontalen Bewegungsmessdaten, die kontinuierlich von den mindestens drei horizontal ausgerichteten Geophonen erhalten werden, und dann das Überlagern der bekannten Lösung aus dem Strukturmodell, um mindestens eine von Dehnung, Spannung und Verformung einer beliebigen Position der Windturbinenturmstruktur genau zu bestimmen.

16. Verfahren nach Anspruch 13, weiter umfassend das Identifizieren mindestens einer von bekannten Kraft- und Eigenformbewegungen aus den angepassten horizontalen Bewegungsmessdaten, die kontinuierlich von den mindestens drei horizontal ausgerichteten Geophonen erhalten werden, und dann das Überlagern der bekannten Lösung aus dem Strukturmodell, um mindestens eine von Dehnung, Spannung und Verformung einer beliebigen Position der Windturbinenturmstruktur genau zu bestimmen.

17. Verfahren nach einem der Ansprüche 13 bis 16, weiter umfassend das synchrone Übertragen von horizontalen Bewegungsmessdaten, die gleichzeitig von den mindestens drei horizontal ausgerichteten Geophonen erhalten werden, an ein Steuerungssystem.

18. Verfahren nach einem der Ansprüche 13 bis 17, weiter umfassend das synchrone Übertragen von vertikalen Bewegungsmessdaten, die gleichzeitig von den mindestens drei vertikal ausgerichteten Geophonen erhalten werden, an ein Steuerungssystem.

19. Verfahren nach Anspruch 18, weiter umfassend das kontinuierliche mindestens eine von Erhalten und Empfangen der vertikalen Bewegungsmessdaten von den mindestens drei vertikal ausgerichteten Geophonen und, basierend auf den kontinuierlich mindestens einen von erhaltenen und empfangenen mindestens drei vertikalen Bewegungsmessdaten, Bestimmen der Richtung und des Neigungswinkels des horizontalen Ebenenabschnitts, der durch die Anordnung der mindestens drei horizontal ausgerichteten Geophone definiert ist.

20. Verfahren nach Anspruch 19, wobei das Messsystem weiter mindestens drei Neigungssensoren umfasst und das Verfahren weiter das kontinuierliche Erhalten von Neigungsdaten von den mindestens drei Neigungssensoren umfasst und, basierend sowohl auf den Neigungsdaten, die von den mindestens drei Neigungssensoren erhalten oder empfangen werden, als auch auf den vertikalen Bewegungsmessdaten, die kontinuierlich von den mindestens drei vertikal ausgerichteten Geophonen erhalten oder empfangen werden, Bestimmen der Richtung und des Neigungswinkels des horizontalen Ebenenabschnitts, der durch die Anordnung der mindestens drei horizontal ausgerichteten Geophone definiert ist.

21. Verfahren nach einem der Ansprüche 13 bis 20, wobei das Verfahren weiter umfasst:
Erhalten eines Strukturmodells des Windturbinensystems;
Identifizieren mindestens einer von Kraft- und Eigenformbewegungen aus den Messdaten; und
Überlagern der bekannten Lösung aus dem Strukturmodell, um mindestens eine von Dehnung, Spannung und Verformung einer beliebigen Position der Windturbinenturmstruktur genau zu bestimmen.

22. Verfahren nach einem der Ansprüche 13 bis 21, wobei das Verfahren weiter umfasst:
Erhalten eines Strukturmodells des Windturbinensystems;
Identifizieren mindestens einer von Kraft- und Eigenformbewegungen aus der kontinuierlich bestimmten aktuellen Richtung und dem kontinuierlich bestimmten aktuellen Neigungswinkel des horizontalen Ebenenabschnitts und den horizontalen Bewegungsmessdaten, die kontinuierlich von den mindestens drei horizontal ausgerichteten Geophonen erhalten werden; und
Überlagern der bekannten Lösung aus dem Strukturmodell, um mindestens eine von Dehnung, Spannung und Verformung einer beliebigen Position der Windturbinenturmstruktur genau zu bestimmen.

## Revendications

1. Système d'éolienne (110) pour générer de l'énergie électrique en réponse au vent, le système d'éolienne comprenant :
une structure de tour d'éolienne (140,240) comprenant une structure de fondation et une structure de pilier vertical (170) présentant une structure de section transversale sensiblement cylindrique et au moins partiellement creuse ;
un rotor (120), supporté par la tour d'éolienne, pour tourner en réponse au vent, dans lequel en réponse à la rotation du rotor, l'éolienne est configurée pour générer de l'énergie électrique ; et un système de mesure comprenant au moins trois géophones orientés horizontalement configurés chacun pour obtenir en continu des données de mesure de mouvement horizontal pour leur position de montage respective dans la structure de pilier vertical et disposés dans trois positions de montage séparées situées dans ce qui est sensiblement la même section de plan horizontal de la structure de pilier vertical, dans lequel ledit système de mesure comprend en outre au moins trois géophones orientés verticalement (190, 290) disposés dans trois positions de montage séparées dans la même section de plan horizontal que les géophones orientés horizontalement et configurés chacun pour obtenir en continu des données de mesure de mouvement vertical pour leur position de montage respective, et dans lequel ledit système d'éolienne est en outre configuré pour :
déterminer la direction et l'angle d'inclinaison actuels de la section de plan horizontal sur la base de données de mesure de mouvement vertical pour les au moins trois positions de montage dans la section de plan horizontal obtenues par chacun des au moins trois géophones orientés verticalement,
ajuster, sur la base de la direction et de l'angle d'inclinaison actuels déterminés de la section de plan horizontal, les données de mesure de mouvement horizontal obtenues par chacun des au moins trois géophones orientés horizontalement, et
déterminer l'au moins un paramètre actuel parmi la déformation, la contrainte et la déformation géométrique induit dans essentiellement toute position arbitraire dans la structure de tour d'éolienne (140, 240) sur la base des données de mesure de mouvement horizontal ajustées.

2. Système d'éolienne selon la revendication 1, dans lequel ledit système d'éolienne est en outre configuré pour identifier au moins un élément parmi une force connue et des mouvements de modes propres à partir des données de mesure obtenues, et puis superposer la solution connue à partir du modèle structurel pour déterminer avec précision au moins un paramètre parmi la déformation, la contrainte et la déformation géométrique d'une position arbitraire quelconque de la structure de tour d'éolienne.

3. Système d'éolienne selon l'une quelconque des revendications 1 et 2, dans lequel ledit système d'éolienne est en outre configuré pour identifier au moins un élément parmi une force connue et des mouvements de modes propres à partir de la direction et de l'angle d'inclinaison actuels déterminés en continu de la section de plan horizontal et des données de mesure de mouvement horizontal obtenues en continu par les au moins trois géophones orientés horizontalement, et puis superposer la solution connue à partir du modèle structurel pour déterminer avec précision au moins un paramètre parmi la déformation, la contrainte et la déformation géométrique d'une position arbitraire quelconque de la structure de tour d'éolienne.

4. Système d'éolienne selon l'une quelconque des revendications 1 à 3, dans lequel ledit système de mesure est configuré pour transmettre en continu et de manière synchrone des données de mesure de mouvement horizontal obtenues simultanément par les au moins trois géophones orientés horizontalement, et dans lequel ledit système de mesure est en outre configuré pour transmettre en continu et de manière synchrone des données de mesure de mouvement vertical obtenues simultanément par les au moins trois géophones orientés verticalement.

5. Système d'éolienne selon la revendication 4, dans lequel ledit système d'éolienne comprend un système de commande couplé en communication audit système de mesure et configuré pour obtenir et/ou recevoir en continu lesdites données de mesure de mouvement vertical à partir des au moins trois géophones orientés verticalement, et, sur la base des au moins trois données de mesure de mouvement vertical obtenues ou reçues en continu et sous l'hypothèse que la section de plan horizontal ne se déplace pas dans la direction verticale, déterminer la direction et l'angle d'inclinaison de la section de plan horizontal définie par l'agencement des au moins trois géophones orientés horizontalement.

6. Système d'éolienne selon l'une quelconque des revendications précédentes, dans lequel chacun desdits au moins trois géophones orientés verticalement est configuré pour obtenir des données de mesure de mouvement, c'est-à-dire des données de vitesse, dans une plage de fréquences plus élevée au-dessus d'une certaine fréquence dans une plage de fréquences comprise entre 0,1 et 0,3 Hz.

7. Système d'éolienne selon l'une quelconque des revendications précédentes, dans lequel ledit système de mesure comprend au moins trois unités de mesure disposées dans trois positions de montage séparées dans la même section de plan horizontal, et dans lequel chacune desdites au moins trois unités de mesure comprend au moins un géophone orienté verticalement et au moins un géophone orienté horizontalement.

8. Système d'éolienne selon l'une quelconque des revendications précédentes, dans lequel ledit système de mesure comprend en outre au moins trois capteurs d'inclinaison disposés dans trois positions de montage séparées situées dans ce qui est sensiblement la même section de plan horizontal que les au moins trois géophones orientés horizontalement et les au moins trois géophones orientés verticalement.

9. Système d'éolienne selon la revendication 8, dans lequel chacun desdits au moins trois capteurs d'inclinaison est configuré pour obtenir des données d'inclinaison dans une plage de fréquences quasi statiques, incluant ainsi également la réponse quasi statique de la tour lors de la détermination de la direction et de l'angle d'inclinaison de la section de plan horizontal définie par l'agencement des au moins trois géophones orientés horizontalement et des au moins trois géophones orientés verticalement.

10. Système d'éolienne selon l'une quelconque des revendications précédentes, dans lequel ledit système de mesure comprend au moins trois unités de mesure disposées dans trois positions de montage séparées dans la même section de plan horizontal, et dans lequel chacune desdites au moins trois unités de mesure comprend au moins un géophone orienté horizontalement, au moins un géophone orienté verticalement et au moins un capteur d'inclinaison.

11. Système d'éolienne selon l'une quelconque des revendications précédentes, dans lequel les au moins trois géophones orientés horizontalement sont disposés à un niveau de hauteur au-dessus de la structure de fondation qui est inférieur à 1/3 de la hauteur totale de la structure de pilier vertical de la structure de tour d'éolienne.

12. Système d'éolienne selon l'une quelconque des revendications précédentes, dans lequel l'axe normal d'une section de plan approximativement horizontale essentiellement définie par l'agencement des au moins trois géophones orientés horizontalement est essentiellement parallèle à l'axe longitudinal de la structure de pilier vertical.

13. Procédé de fourniture de données de mesure adaptées pour déterminer au moins un paramètre parmi la déformation, la contrainte et la déformation géométrique dans essentiellement toute position arbitraire de la structure de tour d'éolienne d'un système d'éolienne comprenant une structure de fondation et une structure de pilier vertical présentant une structure de section transversale sensiblement cylindrique et au moins partiellement creuse, ledit système d'éolienne comprenant en outre un système de commande par ordinateur et un rotor configuré pour tourner en réponse au vent et qui est supporté par la structure de tour d'éolienne, ledit procédé comprenant :
a. disposer au moins trois géophones orientés horizontalement dans trois positions de montage séparées dans sensiblement le même plan horizontal de la structure de pilier vertical ;
b. obtenir, en continu par chacun des au moins trois géophones orientés horizontalement, des données de mesure de mouvement pour leur position de montage respective ;
c. disposer au moins trois géophones orientés verticalement dans trois positions de montage séparées dans sensiblement le même plan horizontal de la structure de pilier vertical que les au moins trois géophones orientés horizontalement ;
d. obtenir, en continu par chacun des au moins trois géophones orientés verticalement, des données de mesure de mouvement pour leur position de montage respective ;
e. déterminer, sur la base des données de mesure de mouvement obtenues par chacun des au moins trois géophones orientés verticalement, la direction et l'angle d'inclinaison actuels d'une section de plan horizontal définie par l'agencement des au moins trois géophones orientés horizontalement ;
f. ajuster, sur la base de la direction et de l'angle d'inclinaison actuels déterminés d'une section de plan horizontal, les données de mesure de mouvement obtenues par chacun des au moins trois géophones orientés horizontalement ; et
g. déterminer, sur la base des données de mesure de mouvement ajustées, l'au moins un paramètre actuel parmi la déformation, la contrainte et la déformation géométrique induit dans essentiellement toute position arbitraire dans la structure de tour d'éolienne.

14. Procédé selon la revendication 13, comprenant en outre une identification d'au moins un élément parmi une force connue et des mouvements de modes propres à partir des données de mesure obtenues, et, ensuite, une superposition de la solution connue à partir du modèle structurel pour déterminer avec précision au moins un paramètre parmi la déformation, la contrainte et la déformation géométrique d'une position arbitraire quelconque de la structure de tour d'éolienne.

15. Procédé selon la revendication 13, comprenant en outre une identification d'au moins un élément parmi une force connue et des mouvements de modes propres à partir de la direction et de l'angle d'inclinaison actuels déterminés en continu de la section de plan horizontal et des données de mesure de mouvement horizontal obtenues en continu par les au moins trois géophones orientés horizontalement, et, ensuite, une superposition de la solution connue à partir du modèle structurel pour déterminer avec précision au moins un paramètre parmi la déformation, la contrainte et la déformation géométrique d'une position arbitraire quelconque de la structure de tour d'éolienne.

16. Procédé selon la revendication 13, comprenant en outre une identification d'au moins un élément parmi une force connue et des mouvements de modes propres à partir des données de mesure de mouvement horizontal ajustées obtenues en continu par les au moins trois géophones orientés horizontalement, et, ensuite, une superposition de la solution connue à partir du modèle structurel pour déterminer avec précision l'au moins un paramètre parmi la déformation, la contrainte et la déformation géométrique d'une position arbitraire quelconque de la structure de tour d'éolienne.

17. Procédé selon l'une quelconque des revendications 13 à 16, comprenant en outre une transmission de manière synchrone, à un système de commande, de données de mesure de mouvement horizontal obtenues simultanément par les au moins trois géophones orientés horizontalement.

18. Procédé selon l'une quelconque des revendications 13 à 17, comprenant en outre une transmission de manière synchrone, à un système de commande, de données de mesure de mouvement vertical obtenues simultanément par les au moins trois géophones orientés verticalement.

19. Procédé selon la revendication 18, comprenant en outre au moins une étape effectuée en continu parmi une obtention et une réception desdites données de mesure de mouvement vertical à partir des au moins trois géophones orientés verticalement et, sur la base de l'au moins une étape effectuée en continu consistant en au moins trois données de mesure de mouvement vertical obtenues et reçues, déterminer la direction et l'angle d'inclinaison de la section de plan horizontal définie par l'agencement des au moins trois géophones orientés horizontalement.

20. Procédé selon la revendication 19, dans lequel ledit système de mesure comprend en outre au moins trois capteurs d'inclinaison et ledit procédé comprend en outre une obtention en continu de données d'inclinaison à partir des au moins trois capteurs d'inclinaison et, sur la base à la fois des données d'inclinaison obtenues ou reçues à partir des au moins trois capteurs d'inclinaison et des données de mesure de mouvement vertical obtenues ou reçues en continu à partir des au moins trois géophones orientés verticalement, déterminer la direction et l'angle d'inclinaison de la section de plan horizontal définie par l'agencement des au moins trois géophones orientés horizontalement.

21. Procédé selon l'une quelconque des revendications 13 à 20, ledit procédé comprenant en outre :
obtenir un modèle structurel du système d'éolienne ;
identifier l'au moins un élément parmi une force et des mouvements de modes propres à partir desdites données de mesure ; et
superposer la solution connue à partir du modèle structurel pour déterminer avec précision au moins un paramètre parmi la déformation, la contrainte et la déformation géométrique d'une position arbitraire quelconque de la structure de tour d'éolienne.

22. Procédé selon l'une quelconque des revendications 13 à 21, ledit procédé comprenant en outre :
obtenir un modèle structurel du système d'éolienne ;
identifier au moins un élément parmi une force et des mouvements de modes propres à partir de la direction et de l'angle d'inclinaison actuels déterminés en continu de la section de plan horizontal et des données de mesure de mouvement horizontal obtenues en continu par les au moins trois géophones orientés horizontalement ; et
superposer la solution connue à partir du modèle structurel pour déterminer avec précision au moins un paramètre parmi la déformation, la contrainte et la déformation géométrique d'une position arbitraire quelconque de la structure de tour d'éolienne.
